# EUROPEAN PATENT APPLICATION

(11) **EP 4 322 033 A1**
(43) Date of publication of application: **14.02.2024**
(21) Application number: 21938281.9
(22) Date of filing: 27.04.2021
(51) Int. Cl.: G06F 21/30

(54) **ACCESS METHOD, APPARATUS AND SYSTEM**

(71) Applicant: Huawei Technologies Co., Ltd., Longgang Shenzhen, Guangdong 518129 (CN)
(72) Inventor: LI, Jiangqi, Shenzhen, Guangdong 518129 (CN); GENG, Feng, Shenzhen, Guangdong 518129 (CN); HE, Zhaohua, Shenzhen, Guangdong 518129 (CN); JIN, Shijing, Shenzhen, Guangdong 518129 (CN)
(74) Representative: Goddar, Heinz J.
(86) International application number: PCT/CN2021/090303
(87) International publication number: WO 2022/226794

(57) **Abstract**

An access method, apparatus, and system are disclosed, to implement remote access of a to-be-accessed apparatus to an access apparatus. In the access method, the to-be-accessed apparatus receives a remote authorization request sent by the access apparatus, then the to-be-accessed apparatus returns a remote authorization result to the access apparatus, and then the access apparatus accesses the to-be-accessed apparatus based on a remote authorization success result returned by the to-be-accessed apparatus. The access apparatus remotely authorizes the to-be-accessed apparatus, so that the access apparatus can invoke data of the to-be-accessed apparatus, and the access apparatus can further control the to-be-accessed apparatus.

## Description

### TECHNICAL FIELD

This application relates to the field of internet access technologies, and more specifically, to an access method, apparatus, and system.

### BACKGROUND

With rapid development of the information and communications technology (information and communications technology, ICT), personal data flows are increasing. In addition, with a rapid intelligence development trend of intelligent transportation devices (for example, vehicles), personal data (for example, data of a driver that drives the vehicle) is prone to leakage.

Currently, a technical solution for accessing a vehicle urgently needs to be provided to minimize adverse impact on a driver caused by personal data leakage and implement access to the vehicle by an access apparatus.

### SUMMARY

Embodiments of this application provide an access method, apparatus, and system, to implement access of an access apparatus to a vehicle by using a remote access technology.

According to a first aspect, an embodiment of this application provides an access method, including: receiving a remote authorization request sent by an access apparatus (which may be referred to as a first apparatus), and returning a remote authorization result to the access apparatus based on the remote authorization request.

For example, the remote authorization request may indicate authorized content of remote authorization and/or information about the access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of a to-be-accessed apparatus (which may be referred to as a second apparatus) invoked by the access apparatus and/or a manner in which the access apparatus controls the to-be-accessed apparatus. The information about the access apparatus may include an ID (identity document) of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

In this embodiment of this application, the access apparatus remotely accesses the to-be-accessed apparatus, that is, the access apparatus invokes personal data of the to-be-accessed apparatus, and the access apparatus further controls the to-be-accessed apparatus. This greatly avoids leakage of the personal data of the to-be-accessed apparatus, can minimize a possibility of leakage of the personal data, and helps protect the personal data. In addition, when a fault occurs in the to-be-accessed apparatus, the access apparatus invokes the personal data of the to-be-accessed apparatus and/or the access apparatus controls the access apparatus, so that the fault that occurs in the to-be-accessed apparatus can be rectified timely.

In a possible implementation, the returning a remote authorization result to the access apparatus based on the remote authorization request includes:
determining, based on the remote authorization request, whether the access apparatus is already remotely authorized, which may include the following two processes.

Process 1: If the to-be-accessed apparatus learns, based on the remote authorization request, that the to-be-accessed apparatus already remotely authorizes the access apparatus, the to-be-accessed apparatus may return the remote authorization success result to the access apparatus.

In other words, in the process 1, the to-be-accessed apparatus directly allows access of the access apparatus, and does not need to further determine whether the to-be-accessed apparatus needs to remotely authorize the access apparatus.

Process 2: If the to-be-accessed apparatus determines, based on the remote authorization request, that the to-be-accessed apparatus does not remotely authorize the access apparatus, the to-be-accessed apparatus may determine, based on the authorized content of remote authorization and/or the information about the access apparatus, whether to allow remotely authorizing the access apparatus, and return the remote authorization result to the to-be-accessed apparatus.

In other words, in the process 2, the to-be-accessed apparatus needs to further determine, based on the authorized content of remote authorization and/or the information about the to-be-accessed apparatus, whether the to-be-accessed apparatus needs to remotely authorize the to-be-accessed apparatus, and then returns a determined result (namely, the remote authorization result) to the access apparatus.

Further, in the process 2, the to-be-accessed apparatus may determine, based on the authorized content of remote authorization and/or the information about the access apparatus, and a preset authorization life cycle (the authorization life cycle may be set to a time interval with duration of 3 minutes), whether to allow remotely authorizing the access apparatus. There may be the following cases.

Case 1: If the to-be-accessed apparatus obtains, based on the authorized content of remote authorization and the information about the access apparatus, and the authorization life cycle, a result that the to-be-accessed apparatus allows remotely authorizing the access apparatus, the to-be-accessed apparatus may return the remote authorization success result to the access apparatus.

Case 2: If the to-be-accessed apparatus obtains, based on the authorized content of remote authorization and the information about the access apparatus, and the authorization life cycle, a result that the to-be-accessed apparatus rejects to remotely authorize the access apparatus, the to-be-accessed apparatus may return the remote authorization failure result to the access apparatus.

In a possible implementation, after the returning a remote authorization result to the access apparatus based on the remote authorization request, the access method provided in an embodiment of this application further includes: recording an access log (namely, a log of accessing the to-be-accessed apparatus by the access apparatus).

For example, the access log may indicate that the to-be-accessed apparatus allows access of the access apparatus to the to-be-accessed apparatus, or indicate that the to-be-accessed apparatus rejects access of the access apparatus to the to-be-accessed apparatus, or may indicate that the to-be-accessed apparatus allows access of the access apparatus to the to-be-accessed apparatus and the to-be-accessed apparatus rejects access of the access apparatus to the to-be-accessed apparatus. In other words, regardless of whether the to-be-accessed apparatus allows access of the access apparatus, the to-be-accessed apparatus records the access log. Recording of the access log ensures traceability of a consent/rejection operation (namely, non-repudiation of an authorization action) and facilitates future audit.

In a possible implementation, after the returning a remote authorization result to the access apparatus based on the remote authorization request, the access method provided in an embodiment of this application further includes: generating a configuration file, and synchronizing the configuration file.

The configuration file may include a first configuration file and/or a second configuration file. The first configuration file may be a configuration file corresponding to the remote authorization success result (which can reflect that the to-be-accessed apparatus enables a remote access service of the access apparatus), and the second configuration file may be a configuration file corresponding to the remote authorization failure result (which can reflect that the to-be-accessed apparatus disables/rejects the remote access service of the access apparatus).

It should be noted that the to-be-accessed apparatus may generate only the first configuration file or the second configuration file, or may generate the first configuration file and the second configuration file. It may be understood that the configuration file synchronized by the to-be-accessed apparatus is the configuration file generated by the to-be-accessed apparatus.

In this embodiment of this application, the to-be-accessed apparatus generates a configuration file (namely, the first configuration file) corresponding to the remote authorization success result and/or a configuration file (namely, the second configuration file) corresponding to the remote authorization failure result, to implement update and synchronization of the to-be-accessed apparatus, so that the to-be-accessed apparatus performs authorization service configuration on the access apparatus.

In a possible implementation, after the returning a remote authorization result to the access apparatus based on the remote authorization request, the method further includes:
if the remote authorization success result indicates only the one-time remote authorization success result and the authorization life cycle ends, generating the second configuration file, and controlling, based on the second configuration file, the access apparatus to stop accessing the to-be-accessed apparatus. It should be noted that the second configuration file herein may be the configuration file corresponding to the remote authorization failure result.

According to a second aspect, an embodiment of this application further provides an access method, including: sending a remote authorization request to a to-be-accessed apparatus; receiving a remote authorization result returned by the access apparatus; and accessing the to-be-accessed apparatus based on the authorization success result.

For example, the remote authorization request may indicate authorized content of remote authorization and/or information about an access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of the to-be-accessed apparatus invoked by the access apparatus and/or a manner in which the access apparatus controls the to-be-accessed apparatus. The information about the access apparatus may include an ID of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

It may be further understood that, if the to-be-accessed apparatus returns the remote authorization failure result (which indicates that the to-be-accessed apparatus rejects access of the access apparatus) to the access apparatus, the access apparatus cannot access the to-be-accessed apparatus. The access apparatus can access the to-be-accessed apparatus only when the to-be-accessed apparatus returns the authorization success result to the access apparatus.

It should be noted that the access apparatus can access the to-be-accessed apparatus only after the to-be-accessed apparatus allows access of the access apparatus to the to-be-accessed apparatus. To be specific, the access apparatus can invoke personal data of the to-be-accessed apparatus, and can further control the to-be-accessed apparatus.

In this embodiment of this application, the access apparatus accesses the to-be-accessed apparatus, that is, the access apparatus invokes the personal data of the to-be-accessed apparatus, and the access apparatus further controls the to-be-accessed apparatus. This helps protect the personal data of the to-be-accessed apparatus. In addition, when a fault occurs in the to-be-accessed apparatus, the access apparatus invokes the personal data of the to-be-accessed apparatus and/or the access apparatus controls the access apparatus, so that the fault that occurs in the to-be-accessed apparatus can be rectified timely.

According to a third aspect, an embodiment of this application provides an access method, including: An access apparatus sends a remote authorization request to a to-be-accessed apparatus. The to-be-accessed apparatus receives the remote authorization request sent by the access apparatus. The to-be-accessed apparatus returns a remote authorization result to the access apparatus based on the remote authorization request. The access apparatus receives the remote authorization result returned by the to-be-accessed apparatus. The access apparatus accesses the to-be-accessed apparatus based on the remote authorization success result.

For example, the remote authorization request may indicate authorized content of remote authorization and/or information about the access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of the to-be-accessed apparatus invoked by the access apparatus and/or a manner in which the access apparatus controls the to-be-accessed apparatus. The information about the access apparatus may include an ID of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

In a possible implementation, that the to-be-accessed apparatus returns a remote authorization result to the access apparatus based on the remote authorization request includes:

The to-be-accessed apparatus determines, based on the remote authorization request, whether the access apparatus is already remotely authorized, which may include the following two processes.

Process 1: If the to-be-accessed apparatus learns, based on the remote authorization request, that the to-be-accessed apparatus already remotely authorizes the access apparatus, the to-be-accessed apparatus may return the remote authorization success result to the access apparatus.

In other words, in the process 1, the to-be-accessed apparatus directly allows access of the access apparatus, and does not need to further determine whether the to-be-accessed apparatus needs to remotely authorize the access apparatus.

Process 2: If the to-be-accessed apparatus determines, based on the remote authorization request, that the to-be-accessed apparatus does not remotely authorize the access apparatus, the to-be-accessed apparatus may determine, based on the authorized content of remote authorization and/or the information about the access apparatus, whether to allow remotely authorizing the access apparatus, and return the remote authorization result to the to-be-accessed apparatus.

In other words, in the process 2, the to-be-accessed apparatus needs to further determine, based on the authorized content of remote authorization and/or the information about the to-be-accessed apparatus, whether the to-be-accessed apparatus needs to remotely authorize the to-be-accessed apparatus, and then returns a determined result (namely, the remote authorization result) to the access apparatus.

Further, in the process 2, the to-be-accessed apparatus may determine, based on the authorized content of remote authorization and/or the information about the access apparatus, and a preset authorization life cycle, whether to allow remotely authorizing the access apparatus. There may be the following two cases.

Case 1: If the to-be-accessed apparatus obtains, based on the authorized content of remote authorization and the information about the access apparatus, and the authorization life cycle, a result that the to-be-accessed apparatus allows remotely authorizing the access apparatus, the to-be-accessed apparatus may return the remote authorization success result to the access apparatus.

Case 2: If the to-be-accessed apparatus obtains, based on the authorized content of remote authorization and the information about the access apparatus, and the authorization life cycle, a result that the to-be-accessed apparatus rejects to remotely authorize the access apparatus, the to-be-accessed apparatus may return the remote authorization failure result to the access apparatus.

In a possible implementation, after the returning a remote authorization result to the access apparatus based on the remote authorization request, the access method provided in an embodiment of this application further includes: recording an access log (namely, a log of accessing the to-be-accessed apparatus by the access apparatus).

For example, the access log may indicate that the to-be-accessed apparatus allows access of the access apparatus to the to-be-accessed apparatus, or indicate that the to-be-accessed apparatus rejects access of the access apparatus to the to-be-accessed apparatus, or may indicate that the to-be-accessed apparatus allows access of the access apparatus to the to-be-accessed apparatus and the to-be-accessed apparatus rejects access of the access apparatus to the to-be-accessed apparatus. In other words, regardless of whether the to-be-accessed apparatus allows access of the access apparatus, the to-be-accessed apparatus records the access log. Recording of the access log ensures traceability of a consent/rejection operation (namely, non-repudiation of an authorization action) and facilitates future audit.

In a possible implementation, after the returning a remote authorization result to the access apparatus based on the remote authorization request, the access method provided in an embodiment of this application further includes: generating a configuration file, and synchronizing the configuration file.

The configuration file may include a first configuration file and/or a second configuration file. The first configuration file may be a configuration file corresponding to the remote authorization success result (which can reflect that the to-be-accessed apparatus enables a remote access service of the access apparatus), and the second configuration file may be a configuration file corresponding to the remote authorization failure result (which can reflect that the to-be-accessed apparatus disables/rejects the remote access service of the access apparatus).

It should be noted that the to-be-accessed apparatus may generate only the first configuration file or the second configuration file, or may generate the first configuration file and the second configuration file. It may be understood that the configuration file synchronized by the to-be-accessed apparatus is the configuration file generated by the to-be-accessed apparatus.

In this embodiment of this application, the to-be-accessed apparatus generates a configuration file (namely, the first configuration file) corresponding to the remote authorization success result and/or a configuration file (namely, the second configuration file) corresponding to the remote authorization failure result, to implement update and synchronization of the to-be-accessed apparatus, so that the to-be-accessed apparatus performs authorization service configuration on the access apparatus.

In a possible implementation, after the returning a remote authorization result to the access apparatus based on the remote authorization request, the method further includes: if the remote authorization success result indicates only the one-time remote authorization success result and the authorization life cycle ends, generating the second configuration file, and controlling, based on the second configuration file, the access apparatus to stop accessing the to-be-accessed apparatus. It should be noted that the second configuration file herein is the same as the foregoing second configuration file, and may also be the configuration file corresponding to the remote authorization failure result.

According to a fourth aspect, an embodiment of this application further provides a to-be-accessed apparatus. The to-be-accessed apparatus may include a receiving module and a sending module. The receiving module is configured to receive a remote authorization request sent by an access apparatus. The sending module is configured to return a remote authorization result to the access apparatus based on the remote authorization request.

For example, the remote authorization request may indicate authorized content of remote authorization and/or information about the access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of the to-be-accessed apparatus invoked by the access apparatus and/or a manner in which the access apparatus controls the to-be-accessed apparatus. The information about the access apparatus may include an ID of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

In a possible implementation, the sending module determines, based on the remote authorization request, whether the access apparatus is already remotely authorized, which may include the following two processes.

Process 1: If the to-be-accessed apparatus learns, based on the remote authorization request, that the to-be-accessed apparatus already remotely authorizes the access apparatus, the sending module may return the remote authorization success result to the access apparatus.

In other words, in the process 1, the to-be-accessed apparatus directly allows access of the access apparatus, and does not need to further determine whether the to-be-accessed apparatus needs to remotely authorize the access apparatus.

Process 2: If the to-be-accessed apparatus determines, based on the remote authorization request, that the to-be-accessed apparatus does not remotely authorize the access apparatus, the sending module may determine, based on the authorized content of remote authorization and/or the information about the access apparatus, whether to allow remotely authorizing the access apparatus, and return the remote authorization result to the to-be-accessed apparatus.

In other words, in the process 2, the to-be-accessed apparatus needs to further determine, based on the authorized content of remote authorization and/or the information about the to-be-accessed apparatus, whether the to-be-accessed apparatus needs to remotely authorize the to-be-accessed apparatus, and then returns a determined result (namely, the remote authorization result) to the access apparatus.

Further, in the process 2, the sending module may determine, based on the authorized content of remote authorization and/or the information about the access apparatus, and a preset authorization life cycle, whether to allow remotely authorizing the access apparatus. There may be the following cases.

Case 1: If the sending module obtains, based on the authorized content of remote authorization and the information about the access apparatus, and the authorization life cycle, a result that the to-be-accessed apparatus allows remotely authorizing the access apparatus, the sending module may return the remote authorization success result to the access apparatus.

Case 2: If the sending module obtains, based on the authorized content of remote authorization and the information about the access apparatus, and the authorization life cycle, a result that the to-be-accessed apparatus rejects to remotely authorize the access apparatus, the sending module may return the remote authorization failure result to the access apparatus.

In a possible implementation, the to-be-accessed apparatus may further include a recording module coupled to the sending module. The recording module is configured to record an access log.

For example, the access log may indicate that the to-be-accessed apparatus allows access of the access apparatus to the to-be-accessed apparatus, or indicate that the to-be-accessed apparatus rejects access of the access apparatus to the to-be-accessed apparatus, or may indicate that the to-be-accessed apparatus allows access of the access apparatus to the to-be-accessed apparatus and the to-be-accessed apparatus rejects access of the access apparatus to the to-be-accessed apparatus. In other words, regardless of whether the to-be-accessed apparatus allows access of the access apparatus, the to-be-accessed apparatus records the access log. Recording of the access log ensures traceability of a consent/rejection operation (namely, non-repudiation of an authorization action) and facilitates future audit.

In a possible implementation, the to-be-accessed apparatus may further include a first generation module and a synchronization module. The first generation module is coupled to the sending module and the synchronization module.

Further, the first generation module is configured to generate a configuration file. The synchronization module is configured to synchronize the configuration file.

The configuration file may include a first configuration file and/or a second configuration file. The first configuration file may be a configuration file corresponding to the remote authorization success result (which can reflect that the to-be-accessed apparatus enables a remote access service of the access apparatus), and the second configuration file may be a configuration file corresponding to the remote authorization failure result (which can reflect that the to-be-accessed apparatus disables/rejects the remote access service of the access apparatus).

It should be noted that the first generation module may generate only the first configuration file or the second configuration file, or may generate the first configuration file and the second configuration file. It may be understood that the configuration file synchronized by the synchronization module is the configuration file generated by the to-be-accessed apparatus.

In a possible implementation, the to-be-accessed apparatus may further include a second generation module and a control module. The second generation module is coupled to the sending module and the control module.

Further, the second generation module is configured to: when the authorization life cycle ends and the remote authorization success result indicates the one-time remote authorization success result, generate the second configuration file. The control module is configured to control, based on the second configuration file, the access apparatus to stop accessing the to-be-accessed apparatus. It should be noted that the second configuration file herein is the same as the foregoing second configuration file, and may also be the configuration file corresponding to the remote authorization failure result.

According to a fifth aspect, an embodiment of this application further provides an access apparatus. The access apparatus may include a sending module, a receiving module, and an access module.

Further, the sending module is configured to send a remote authorization request to a to-be-accessed apparatus. The receiving module is configured to receive a remote authorization result returned by the to-be-accessed apparatus. The access module is configured to access the to-be-accessed apparatus based on an authorization success result.

For example, the remote authorization request may indicate authorized content of remote authorization and/or information about the access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of the to-be-accessed apparatus invoked by the access apparatus and/or a manner in which the access apparatus controls the to-be-accessed apparatus. The information about the access apparatus may include an ID of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

According to a sixth aspect, an embodiment of this application further provides an access system. The access system may include the to-be-accessed apparatus provided in the fourth aspect and the access apparatus provided in the fifth aspect.

According to a seventh aspect, an embodiment of this application further provides a to-be-accessed apparatus. The to-be-accessed apparatus may include a first node.

Further, the first node is configured to: first receive a remote authorization request sent by an access apparatus, and then return a remote authorization result to the access apparatus (which may be a second node below) based on the remote authorization request.

For example, the remote authorization request may indicate authorized content of remote authorization and/or information about the access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of the to-be-accessed apparatus invoked by the access apparatus and/or a manner in which the access apparatus controls the to-be-accessed apparatus. The information about the access apparatus may include an ID of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

In a possible implementation, in addition to the first node, the to-be-accessed apparatus may further include a second node. The second node is coupled to the first node.

Further, the first node is further configured to determine, based on the remote authorization request, whether the second node already remotely authorizes the access apparatus. If the second node already remotely authorizes the access apparatus, the first node returns the remote authorization success result to the access apparatus. If the second node does not remotely authorize the access apparatus, the second node is configured to determine, based on the remote authorization request, whether to allow remotely authorizing the access apparatus, to obtain the remote authorization result. After the second node obtains the remote authorization result based on the remote authorization request, the first node is further configured to return the remote authorization result to the access apparatus.

In a possible implementation, the second node is further configured to determine, based on the remote authorization request and a preset authorization life cycle, whether to allow remotely authorizing the access apparatus. There are the following two cases.

Case 1: The second node determines, based on the remote authorization request and the preset authorization life cycle, to allow remotely authorizing the access apparatus, and the second node returns a first message to the first node.

Case 2: The second node determines, based on the remote authorization request and the preset authorization life cycle, to reject to remotely authorize the access apparatus, and the second node returns a second message to the first node.

It should be noted that the first message indicates that the second node allows remotely authorizing the access apparatus. The second message indicates that the second node rejects to remotely authorize the access apparatus.

After the second node returns the first message or the second message, the first node is further configured to: return the remote authorization success result to the access apparatus based on the first message, or return the remote authorization failure result to the access apparatus based on the second message.

In other words, after the second node returns the first message to the first node, the first node returns the remote authorization success result to the access apparatus based on the first message. After the second node returns the second message to the first node, the first node returns the remote authorization failure result to the access apparatus based on the second message.

In a possible implementation, the to-be-accessed apparatus further includes a third node, and the third node is coupled to the first node.

Further, the first node is further configured to: record an access log, and generate a configuration file. The third node is configured to synchronize the configuration file generated by the first node.

In an example, the access log may indicate that the to-be-accessed apparatus (which may be the second node in the to-be-accessed apparatus) allows access of the access apparatus to the to-be-accessed apparatus, or indicate that the to-be-accessed apparatus rejects access of the access apparatus to the to-be-accessed apparatus, or may indicate that the to-be-accessed apparatus allows access of the access apparatus to the to-be-accessed apparatus and the to-be-accessed apparatus rejects access of the access apparatus to the to-be-accessed apparatus. In other words, regardless of whether the to-be-accessed apparatus allows access of the access apparatus, the to-be-accessed apparatus records the access log. Recording of the access log ensures traceability of a consent/rejection operation (namely, non-repudiation of an authorization action) and facilitates future audit.

In another example, the configuration file may include a first configuration file and/or a second configuration file. The first configuration file may be a configuration file corresponding to the remote authorization success result (which can reflect that the to-be-accessed apparatus enables a remote access service of the access apparatus), and the second configuration file may be a configuration file corresponding to the remote authorization failure result (which can reflect that the to-be-accessed apparatus disables/rejects the remote access service of the access apparatus).

It should be noted that the first node may generate only the first configuration file or the second configuration file, or may generate the first configuration file and the second configuration file. It may be understood that the configuration file synchronized by the first node is the configuration file generated by the to-be-accessed apparatus.

In this embodiment of this application, the to-be-accessed apparatus generates a configuration file (namely, the first configuration file) corresponding to the remote authorization success result and/or a configuration file (namely, the second configuration file) corresponding to the remote authorization failure result, to implement update and synchronization of the to-be-accessed apparatus, so that the to-be-accessed apparatus performs authorization service configuration on the access apparatus.

In a possible implementation, the first node is further configured to: when the authorization life cycle ends and the remote authorization success result indicates the one-time remote authorization success result, generate the second configuration file (the second configuration file is the configuration file corresponding to the remote authorization failure result), and send the second configuration file to the third node. The third node is further configured to control, based on the second configuration file, the access apparatus to stop accessing the to-be-accessed apparatus.

According to an eighth aspect, an embodiment of this application provides an access apparatus. The access apparatus may include a fourth node. The fourth node is configured to: send a remote authorization request to a to-be-accessed apparatus (which may be a first node in the to-be-accessed apparatus), then receive a remote authorization result returned by the to-be-accessed apparatus, and finally, access the to-be-accessed apparatus based on an authorization success result.

For example, the remote authorization request may indicate authorized content of remote authorization and/or information about the access apparatus. In other words, the remote authorization request may indicate only the authorized content of remote authorization, or may indicate only the information about the access apparatus, or may indicate the authorized content of remote authorization and the information about the access apparatus.

Further, the authorized content of remote authorization may include data content of the to-be-accessed apparatus invoked by the access apparatus and/or a manner in which the access apparatus controls the to-be-accessed apparatus. The information about the access apparatus may include an ID of the access apparatus, and the ID of the access apparatus is used to distinguish, based on different IDs, the access apparatus that requires remote authorization.

For example, the remote authorization result may be a remote authorization success result, or may be a remote authorization failure result. Herein, the remote authorization success result may indicate that the to-be-accessed apparatus allows access of the access apparatus to the to-be-accessed apparatus, and the remote authorization failure result may indicate that the to-be-accessed apparatus rejects access of the access apparatus to the to-be-accessed apparatus.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus allows access of the access apparatus to the to-be-accessed apparatus only once. The permanent remote authorization success result may indicate that the to-be-accessed apparatus allows permanent access of the access apparatus to the to-be-accessed apparatus. The one-time remote authorization success result and the permanent remote authorization result may indicate that the to-be-accessed apparatus allows permanent access of the access apparatus to the to-be-accessed apparatus when the to-be-accessed apparatus allows access of the access apparatus to the to-be-accessed apparatus at a time.

It may be further understood that, if the to-be-accessed apparatus returns the remote authorization failure result (which indicates that the to-be-accessed apparatus rejects access of the access apparatus) to the access apparatus, the access apparatus cannot access the to-be-accessed apparatus. The access apparatus can access the to-be-accessed apparatus only when the to-be-accessed apparatus returns the authorization success result to the access apparatus.

It should be noted that the access apparatus can access the to-be-accessed apparatus only after the to-be-accessed apparatus allows access of the access apparatus to the to-be-accessed apparatus. To be specific, the access apparatus can invoke personal data of the to-be-accessed apparatus, and can further control the to-be-accessed apparatus.

According to a ninth aspect, an embodiment of this application provides an access system. The access system includes the to-be-accessed apparatus according to the seventh aspect and the access apparatus according to the eighth aspect.

According to a tenth aspect, an embodiment of this application provides an electronic device, including:
one or more processors; and
a memory, configured to store one or more programs, where
when the one or more programs are executed by the one or more processors, the access method provided in the first aspect is implemented.

According to an eleventh aspect, an embodiment of this application provides a transmission chip, including:
one or more processors; and
a memory, configured to store one or more programs, where
when the one or more programs are executed by the one or more processors, the access method provided in the second aspect is implemented.

According to a twelfth aspect, an embodiment of this application provides a computer-readable storage medium. The computer-readable storage medium stores a computer program, and when the computer program is executed, the access method according to any one of the first aspect to the third aspect or the possible implementations of the first aspect to the third aspect is implemented.

According to a thirteenth aspect, an embodiment of this application provides a computer program. When the computer program is executed by a computer, the access method according to any one of the first aspect to the third aspect or the possible implementations of the first aspect to the third aspect is implemented.

It should be understood that, technical solutions in the second aspect to the thirteenth aspect of this application are consistent with technical solutions in the first aspect of this application. Beneficial effects achieved by the various aspects and corresponding feasible implementations are similar. Details are not described again.

### BRIEF DESCRIPTION OF DRAWINGS

FIG. 1 is a schematic diagram of a network architecture for interaction between a cloud side and a vehicle according to an embodiment of this application;
FIG. 2 is a schematic flowchart of an access method according to an embodiment of this application;
FIG. 3 is another schematic flowchart of an access method according to an embodiment of this application;
FIG. 4 is still another schematic flowchart of an access method according to an embodiment of this application;
FIG. 5 is a schematic diagram of a structure of a to-be-accessed apparatus according to an embodiment of this application;
FIG. 6 is a schematic diagram of another structure of a to-be-accessed apparatus according to an embodiment of this application;
FIG. 7 is a schematic diagram of still another structure of a to-be-accessed apparatus according to an embodiment of this application;
FIG. 8 is a schematic diagram of a structure of an access apparatus according to an embodiment of this application;
FIG. 9 is a schematic diagram of a structure of an access system VS1 according to an embodiment of this application;
FIG. 10 is a schematic diagram of another structure of an access system VS1 according to an embodiment of this application;
FIG. 11 is a schematic diagram of yet another structure of a to-be-accessed apparatus according to an embodiment of this application;
FIG. 12 is a schematic diagram of still yet another structure of a to-be-accessed apparatus according to an embodiment of this application;
FIG. 13 is a schematic diagram of a further structure of a to-be-accessed apparatus according to an embodiment of this application;
FIG. 14 is a schematic diagram of another structure of an access apparatus according to an embodiment of this application;
FIG. 15 is a schematic diagram of a structure of an access system VS2 according to an embodiment of this application;
FIG. 16 is a schematic flowchart of an interaction process between nodes in an access system VS2 according to an embodiment of this application;
FIG. 17 is a schematic diagram of a structure of a logical structure framework according to an embodiment of this application;
FIG. 18A and FIG. 18B are a schematic flowchart of a working process of an access system VS2 according to an embodiment of this application; and
FIG. 19A and FIG. 19B are another schematic flowchart of a working process of an access system VS2 according to an embodiment of this application.

### DESCRIPTION OF EMBODIMENTS

The following describes technical solutions of this application with reference to accompanying drawings.

To make the objectives, technical solutions, and advantages of this application clearer, the following clearly and completely describes the technical solutions of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

In this specification, embodiments, claims, and accompanying drawings of this application, terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof indicates any combination of the following, including any combination of one or more of the following. For example, at least one of a, b, or c may indicate a, b, c, a and b, a and c, b and c, or a, b, and c, where a, b, and c may be singular or plural.

With rapid development of an information and communication technology (information and communication technology, ICT), personal data flows are increasing. In addition, a breakthrough has been made in an authorization technology.

For example, to protect personal data of a mobile phone user from being leaked randomly, the mobile phone user may grant permission to be used by an application (application, which is briefly referred to as an app) on the mobile phone, to obtain an authorization result (the authorization result may be that the mobile phone user allows the permission to be used by the application app, or may be that the mobile phone user rejects the permission to be used by the app). Then, the application app uses/does not use the to-be-used permission based on the authorization result.

For another example, with a rapid development trend of vehicle intelligence, personal data of a vehicle user (for example, a driver) is also prone to leakage. To minimize adverse impact on the vehicle user caused by personal data leakage, when the personal data needs to be accessed, the vehicle user may authorize an access target (for example, a cloud side (including one or more servers)). Then, the access target accesses/does not access the personal data of the vehicle user based on an authorization result of the vehicle user (the authorization result may be that the vehicle user allows access of the access target to the personal data of the vehicle user, or may be that the vehicle user rejects access of the access target to the personal data of the vehicle user).

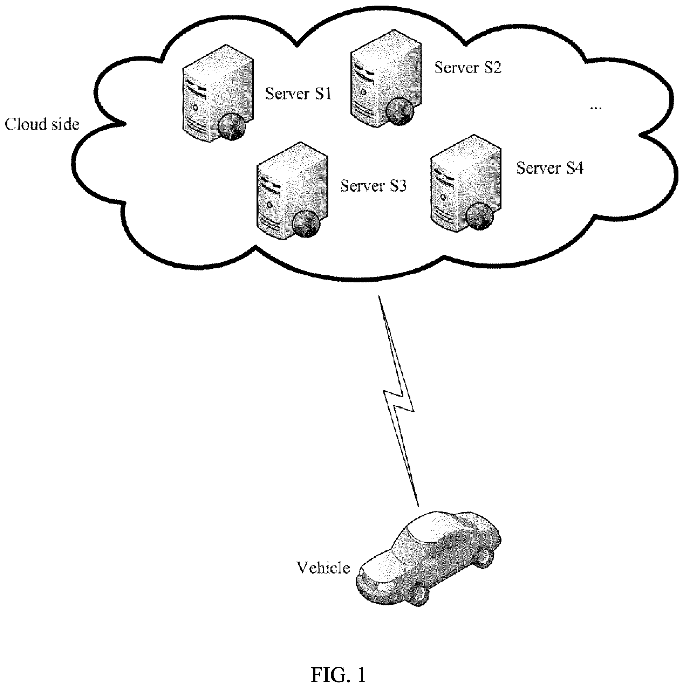

A network architecture for interaction between a cloud side and a vehicle is shown in FIG. 1. In FIG. 1, the cloud side includes at least one server (namely, a server S1, a server S2, a server S3, a server S4, ..., and a server SM in FIG. 1). The server is a device having a data processing capability, and may be physical devices such as hosts or servers, or may be virtual devices such as virtual machines or containers. It should be noted that, for ease of description herein, the server is referred to as a server. In a specific implementation process, the server may be a server, or may be another device having a data processing capability, or may be a module (for example, a chip or an integrated circuit) in a device.

Further, in embodiments of this application, the vehicle user authorizes the access target in the following two measures.

Measure 1: Because a vehicle (which may be a control system CS of the vehicle) usually has a function to share data like a related road section video and related navigation data of the vehicle in motion, when the vehicle user allows access of the access target, the vehicle user may share the data by using the control system CS, that is, authorize the access target to access the data. Certainly, the vehicle user may control the access target to stop accessing the data at any time.

Measure 2: Because the control system CS needs to access related personal data like location permission, camera (or album) permission, microphone permission, and biometric feature permission of the vehicle user during use, the control system CS needs to request authorization of the vehicle user. When the control system CS sends an authorization request to the vehicle user, the vehicle user may allow access of the control system CS by using a voice instruction.

An authorization process in the measure 1 may be considered as a process in which the vehicle user locally authorizes the access target in advance. This cannot implement temporary one-time authorization to the access target in a use process of the vehicle, and cannot implement remote authorization of the vehicle user to the access target. An authorization process in the measure 2 can only implement authorization of the control system CS to the personal data related to the permission. In addition, similar to the first measure, the measure 2 cannot implement remote authorization of the vehicle user to the access target.

In addition, when a fault occurs in the vehicle, an access apparatus (for example, the server) needs to access the vehicle, that is, the access apparatus needs to invoke data of the vehicle and/or the access apparatus needs to control the vehicle, so that the fault can be rectified timely.

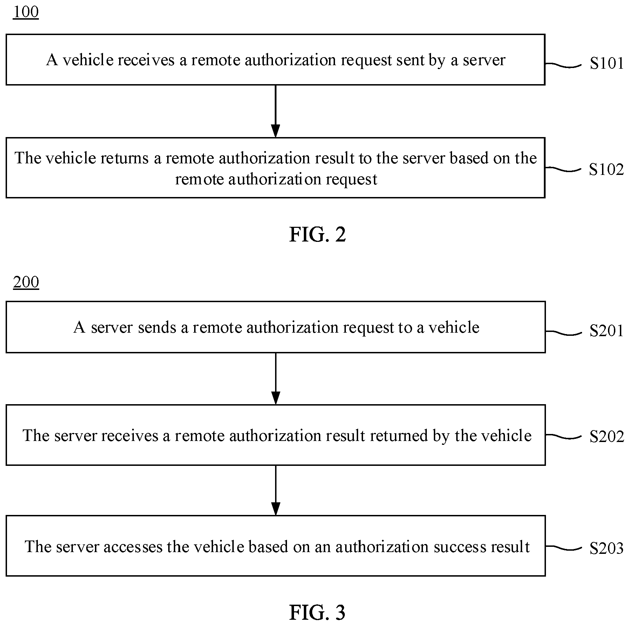

Therefore, in embodiments of this application, an access method is provided by using an example in which the server is an access apparatus and the vehicle is a to-be-accessed apparatus, to overcome the foregoing technical problem. As shown in FIG. 2, the process 100 may be implemented by using the following steps.

Step S101: A vehicle receives a remote authorization request sent by a server.

The remote authorization request may indicate authorized content of remote authorization and/or information about the server. In other words, the remote authorization request may indicate only the authorized content of remote authorization, or may indicate only the information about the server, or may indicate the authorized content of remote authorization and the information about the server.

Further, the authorized content of remote authorization may include data content of the vehicle (for example, a driving speed of the vehicle) invoked by the server and/or a manner in which the server controls the vehicle (for example, the server controls the vehicle to stop or decelerate). The information about the server may include an ID of the server, and the ID of the server is used to distinguish, based on different IDs, the server that requires remote authorization.

Step S102: The vehicle returns a remote authorization result to the server based on the remote authorization request.

The remote authorization result may be a remote authorization success result, or may be a remote authorization failure result. Herein, the remote authorization success result may indicate that the vehicle allows access of the server to the vehicle, and the remote authorization failure result may indicate that the vehicle rejects access of the server to the vehicle.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the vehicle allows access of the server to the vehicle only once. The permanent remote authorization success result may indicate that the vehicle allows permanent access of the server to the vehicle. The one-time remote authorization success result and the permanent remote authorization result may indicate that the vehicle allows permanent access of the server to the vehicle when the vehicle allows access of the server to the vehicle at a time.

In a possible implementation, the authorized content of remote authorization and/or the information about the server in the remote authorization request may be displayed in a pop-up window form on an interface of an application app in a mobile phone of a vehicle user (namely, a user who uses the vehicle). Then, the vehicle user may tap an "allow" window or a "reject" window on the interface of the application app, so that the vehicle user can remotely authorize the server.

For example, when tapping the "allow" window, the vehicle user may choose to simultaneously tap a "permanently allow authorization switch" window. In this way, the vehicle user can remotely authorize the server for one time, and the vehicle can remotely authorize the server permanently. When the server needs to access the vehicle based on the server already permanently authorized by the vehicle user, the server does not need to initiate a remote authorization request to the vehicle again based on the same authorized content of remote authorization and/or information about the server, but remotely accesses the vehicle directly. The server can be prevented from frequently accessing the vehicle, that is, a frequency of accessing the vehicle by the server can be reduced. This simplifies an access process.

Certainly, if the vehicle user taps the "reject" window in the application app, after receiving the remote authorization failure result returned by the vehicle, the server cannot remotely access the vehicle. In addition, if the vehicle user only taps the "allow" window in the application app, but does not tap the "permanently allow authorization switch" window, it indicates that the vehicle user allows to authorize the server only once. In addition, the vehicle user may set an authorization life cycle of one-time authorization. When the authorization life cycle ends, the server stops remotely accessing the vehicle.

In the access method implemented by using FIG. 1 and step S101 and step S 102 in this embodiment of this application, the server accesses the vehicle, that is, the server invokes personal data of the vehicle user in the vehicle, and the server further controls the vehicle. This greatly avoids leakage of the personal data of the vehicle user, can minimize a possibility of leakage of the personal data of the vehicle user, and helps protect the personal data of the vehicle user. In addition, when a fault occurs in the to-be-accessed apparatus, the access apparatus invokes the personal data of the to-be-accessed apparatus and/or the access apparatus controls the access apparatus, so that the fault that occurs in the to-be-accessed apparatus can be rectified timely.

In a possible implementation, that the vehicle returns the remote authorization result to the server based on the remote authorization request may be implemented in the following process.

The vehicle determines, based on the remote authorization request, whether the vehicle already remotely authorizes the server, which may include the following two processes.

Process 1: If the vehicle learns, based on the remote authorization request, that the vehicle already remotely authorizes the server, the vehicle may return the remote authorization success result to the server. In other words, in this case, the vehicle directly allows access of the server, and does not need to further determine whether the vehicle needs to remotely authorize the server.

Process 2: If the vehicle determines, based on the remote authorization request, that the vehicle does not remotely authorize the server, the vehicle may determine, based on the authorized content of remote authorization and/or the information about the server, whether to allow remotely authorizing the server, and return the remote authorization result to the server. In other words, in this case, the vehicle needs to further determine, based on the authorized content of remote authorization and/or the information about the server, whether the vehicle needs to remotely authorize the server, and then returns a determined result (namely, the remote authorization result) to the server.

Further, in the process 2, the vehicle may determine, based on the authorized content of remote authorization and/or the information about the server, and a preset authorization life cycle (the authorization life cycle may be set to a time interval with duration of 3 minutes), whether to allow remotely authorizing the server. There may be the following two cases.

Case 1: If the vehicle obtains, based on the authorized content of remote authorization and the information about the server, and the authorization life cycle, a result that the vehicle allows remotely authorizing the server, the vehicle may return the remote authorization success result to the server.

Case 2: If the vehicle obtains, based on the authorized content of remote authorization and the information about the server, and the authorization life cycle, a result that the vehicle rejects to remotely authorize the server, the vehicle may return the remote authorization failure result to the server.

In the case 1, the vehicle user who uses the vehicle may tap the "allow" window in the application app, to indicate that the vehicle allows remote access of the server, and then the vehicle returns the remote authorization success result to the server. When the vehicle user taps the "allow" window, the vehicle user may further tap the "permanently allow authorization switch" window. In this way, not only the vehicle user can allow one-time remote authorization to the server, but also the vehicle user can allow permanent remote authorization to the server.

In the case 2, the vehicle user may tap the "reject" window in the application app, to indicate that the vehicle rejects remote access of the server, and then the vehicle returns the remote authorization failure result to the server. When the vehicle user taps the "reject" window, the vehicle user may further tap a "permanently reject authorization switch" window. In this way, not only the vehicle user can reject one-time remote authorization to the server, but also the vehicle user can reject permanent remote authorization to the server.

In addition, the interface of the application app includes the "allow" window, the "reject" window, and a countdown window (the countdown may be decreased in a unit of second). If the vehicle user does not tap any window within a time interval before the countdown ends, it indicates that the pop-up window times out. In this case, the vehicle returns the remote authorization failure result to the server, and the server cannot remotely access the vehicle.

In a possible implementation, in an embodiment of this application, after the vehicle returns the remote authorization result to the server based on the remote authorization request in step S102, the vehicle may further record an access log (namely, a log of accessing the vehicle by the server). The access log may indicate that the vehicle allows access of the server to the vehicle, or indicate that the vehicle rejects access of the server to the vehicle, or may indicate that the vehicle allows access of the server to the vehicle and the vehicle rejects access of the server to the vehicle. In other words, regardless of whether the vehicle allows access of the server, the vehicle records the access log. Recording of the access log ensures traceability of a consent/rejection operation (namely, non-repudiation of an authorization action) and facilitates future audit.

In another possible implementation, in an embodiment of this application, after the vehicle returns the remote authorization result to the server based on the remote authorization request in step S102, the vehicle may further generate a configuration file, and synchronize the configuration file.

The configuration file may include a first configuration file and/or a second configuration file. The first configuration file may be a configuration file corresponding to the remote authorization success result (which can reflect that the vehicle enables a remote access service of the server), and the second configuration file may be a configuration file corresponding to the remote authorization failure result (which can reflect that the vehicle disables/rejects the remote access service of the server).

It should be noted that the vehicle may generate only the first configuration file or the second configuration file, or may generate the first configuration file and the second configuration file. It may be understood that the configuration file synchronized by the vehicle is the configuration file generated by the vehicle.

In this embodiment of this application, the vehicle generates a configuration file (namely, the first configuration file) corresponding to the remote authorization success result and/or a configuration file (namely, the second configuration file) corresponding to the remote authorization failure result, to implement update and synchronization of an electronic control unit ECU (refer to the following description) in the vehicle, so that the electronic control unit ECU performs authorization service configuration on the server.

In still another possible implementation, in an embodiment of this application, after the vehicle returns the remote authorization result to the server based on the remote authorization request in step S102, when the remote authorization success result indicates only the one-time remote authorization success result and the authorization life cycle ends, the vehicle may generate the second configuration file, and control, based on the second configuration file, the server to stop accessing the vehicle. It should be noted that the second configuration file herein is the same as the foregoing second configuration file, and may also be the configuration file corresponding to the remote authorization failure result.

FIG. 3 is another schematic flowchart of an access method according to an embodiment of this application. As shown in FIG. 3, the process 200 may be implemented by using the following steps.

Step S201: A server sends a remote authorization request to a vehicle.

Same as that in the foregoing embodiment, the remote authorization request herein may also indicate authorized content of remote authorization and/or information about the server. The authorized content of remote authorization may include data content of the vehicle (for example, a driving speed of the vehicle) invoked by the server and/or a manner in which the server controls the vehicle (for example, the server controls the vehicle to stop or decelerate). The information about the server may include an ID of the server, and the ID of the server is used to distinguish, based on different IDs, the server that requires remote authorization.

Step S202: The server receives a remote authorization result returned by the vehicle.

Same as that in the foregoing embodiment, the remote authorization result herein may also indicate that the vehicle allows access of the server to the vehicle, and the remote authorization failure result may also indicate that the vehicle rejects access of the server to the vehicle.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the vehicle allows access of the server to the vehicle only once. The permanent remote authorization success result may indicate that the vehicle allows permanent access of the server to the vehicle. The one-time remote authorization success result and the permanent remote authorization result may indicate that the vehicle allows permanent access of the server to the vehicle when the vehicle allows access of the server to the vehicle at a time.

It may be further understood that, when the vehicle allows access of the server to the vehicle, the vehicle returns the remote authorization success result to the server, and the server receives the remote authorization success result returned by the vehicle. Therefore, the server can access the vehicle. Certainly, when the vehicle rejects access of the server to the vehicle, the vehicle returns the remote authorization failure result to the server, and the server receives the remote authorization failure result returned by the vehicle. Therefore, the server cannot access the vehicle.

Step S203: The server accesses the vehicle based on the remote authorization success result.

It may be understood that if the vehicle returns the remote authorization failure result (which indicates that the vehicle rejects access of the server) to the server, the server cannot access the vehicle. The server can access the vehicle only when the vehicle returns the authorization success result to the server.

In the access method provided in this embodiment of this application, authorization of the vehicle to the server (that is, the vehicle allows/rejects access of the server) occurs before the server remotely controls the vehicle or remotely diagnoses the vehicle. A vehicle user may permit/forbid (namely, allow/reject), by using a central display screen (namely, the control system CS) of the vehicle or an application app used to control the vehicle, access to be performed by the server to the vehicle. The server can access the vehicle only after the vehicle user allows access of the server to the vehicle. In other words, the server can invoke personal data of the vehicle user, and can further control the vehicle.

According to the access method provided in this embodiment of this application and implemented by using FIG. 3 and the foregoing step S201 to step S203, the server accesses the vehicle. In other words, the server invokes the personal data of the vehicle user in the vehicle, and the server can further control the vehicle. This greatly avoids leakage of the personal data of the vehicle user, can minimize a possibility of leakage of the personal data of the vehicle user, and helps protect the personal data of the vehicle user. In addition, when a fault occurs in the to-be-accessed apparatus, the access apparatus invokes the personal data of the to-be-accessed apparatus and/or the access apparatus controls the access apparatus, so that the fault that occurs in the to-be-accessed apparatus can be rectified timely.

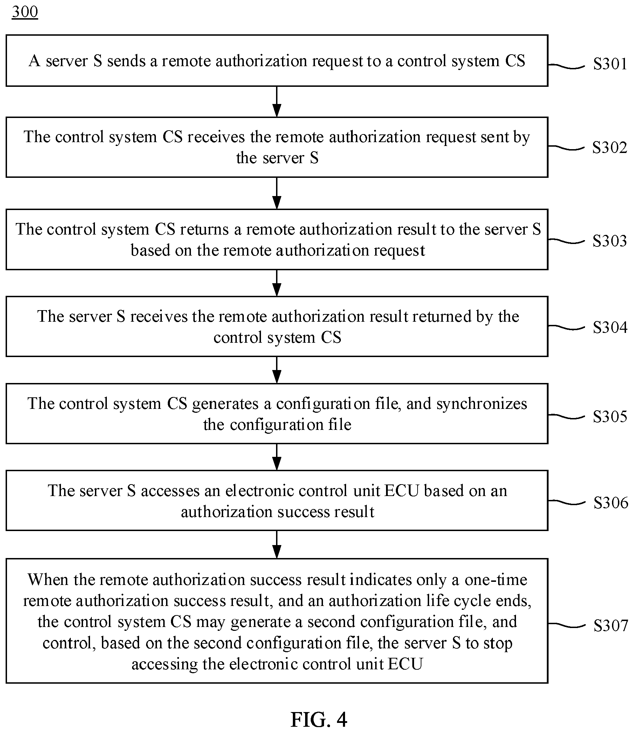

FIG. 4 is still another schematic flowchart of an access method according to an embodiment of this application. A control system CS, a vehicle user VA, and an electronic control unit (electronic control unit, ECU) in a vehicle V are used as an example to describe access of a server S to the vehicle V.

Before the process 300 in FIG. 4 is described, the electronic control unit ECU is first described. Several, tens of, or even hundreds of ECUs are usually disposed in an electronic and electrical architecture (electronic and electrical architecture, EEA) of a vehicle. All ECUs are connected through a CAN bus, a FlexRay bus, or another type of bus.

On the basis of the electronic control unit ECU, the vehicle user VA, the control system CS, and the server S, the process 300 (as shown in FIG. 4) may be implemented in the following steps.

Step S301: The server S sends a remote authorization request to the control system CS.

Step S302: The control system CS receives the remote authorization request sent by the server S.

Step S303: The control system CS returns a remote authorization result to the server S based on the remote authorization request.

Step S304: The server S receives the remote authorization result returned by the control system CS.

Step S305: The control system CS generates a configuration file, and synchronizes the configuration file.

Step S306: The server S accesses the electronic control unit ECU based on a remote authorization success result.

Step S307: When the remote authorization success result indicates only a one-time remote authorization success result, and an authorization life cycle ends, the control system CS may generate a second configuration file, and control, based on the second configuration file, the server S to stop accessing the electronic control unit ECU.

For a detailed process of steps S301 to S307, refer to the foregoing description. In addition, interaction between the server S and the vehicle A in steps S301 to S307 can also achieve the technical effect of the foregoing embodiments. Details are not described in this embodiment of this application.

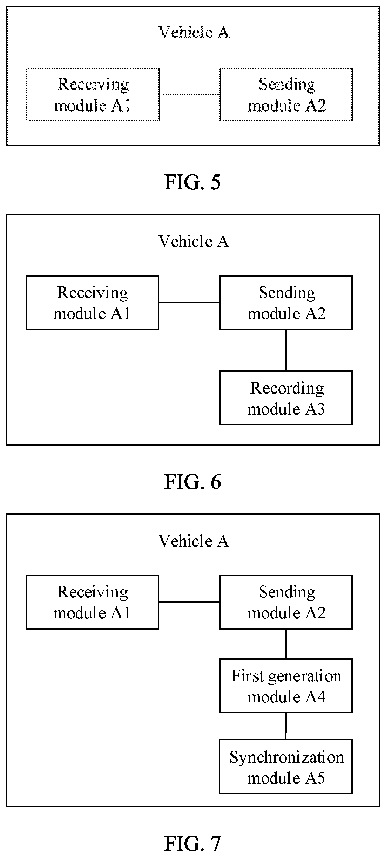

As shown in FIG. 5, a to-be-accessed apparatus (namely, a vehicle A) provided in embodiments of this application may include a receiving module A1 and a sending module A2. The receiving module A1 is coupled to the sending module A2.

The receiving module A1 is configured to receive a remote authorization request sent by a server S. The sending module A2 is configured to return a remote authorization result to the server S based on the remote authorization request from the receiving module A1.

Refer to the foregoing description. The remote authorization request may indicate authorized content of remote authorization and/or information about the server. The authorized content of remote authorization may include data content of the vehicle (for example, a driving speed of the vehicle) invoked by the server and/or a manner in which the server controls the vehicle (for example, the server controls the vehicle to stop or decelerate). The information about the server may include an ID of the server, and the ID of the server is used to distinguish, based on different IDs, the server that requires remote authorization.

Still refer to the foregoing description. The remote authorization result may be a remote authorization success result, or may be a remote authorization failure result. Herein, the remote authorization success result may indicate that the vehicle allows access of the server to the vehicle, and the remote authorization failure result may indicate that the vehicle rejects access of the server to the vehicle.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the vehicle allows access of the server to the vehicle only once. The permanent remote authorization success result may indicate that the vehicle allows permanent access of the server to the vehicle. The one-time remote authorization success result and the permanent remote authorization result may indicate that the vehicle allows permanent access of the server to the vehicle when the vehicle allows access of the server to the vehicle at a time.

In a possible implementation, the sending module A2 may return the remote authorization result to the server S based on the remote authorization request in the following process.

The sending module A2 determines, based on the remote authorization request, whether the server S is already remotely authorized. Herein, there are two cases: a case in which the server S is already remotely authorized and a case in which the server S is not remotely authorized.

Case 1: If the sending module A2 learns, based on the remote authorization request, that the sending module A2 already remotely authorizes the server S, the sending module A2 may return the remote authorization success result to the server S. In other words, in this case, the vehicle A (namely, the sending module A2 in the vehicle A) directly allows access of the server S.

Case 2: If the sending module A2 determines, based on the remote authorization request, that the sending module A2 does not remotely authorize the server S, the sending module A2 may determine, based on the authorized content of remote authorization and/or the information about the server, whether the sending module A2 allows remotely authorizing the server S, and return the remote authorization result to the server S. In other words, in this case, the vehicle needs to further determine, based on the authorized content of remote authorization and/or the information about the server, whether the vehicle needs to remotely authorize the server S, and then returns a determined result (namely, the remote authorization result) to the server S.

Further, in the case 2, the sending module A2 may determine, based on the authorized content of remote authorization and the information about the server, and a preset authorization life cycle (the authorization life cycle may be set to time interval with duration of 3 minutes), whether to allow remotely authorizing the server S. There may be the following two aspects.

In one aspect, if the sending module A2 obtains, based on the authorized content of remote authorization and the information about the server, and the authorization life cycle, a result that the sending module A2 allows remotely authorizing the server S, the vehicle A (namely, the sending module A2 in the vehicle A) may return the authorization success result to the server S.

In the other aspect, if the sending module A2 obtains, based on the authorized content of remote authorization and the information about the server, and the authorization life cycle, a result that the sending module A2 rejects to remotely authorize the server S, the vehicle A (namely, the sending module A2 in the vehicle A) may return the authorization failure result to the server S.

As shown in FIG. 6, in addition to the receiving module A1 and the sending module A2, the vehicle A provided in embodiments of this application further includes a recording module A3. The recording module A3 is coupled to the sending module A2.

In a possible implementation, the recording module A3 is configured to record an access log.

Optionally, the access log may indicate that the vehicle allows access of a vehicle cloud, or may indicate that the vehicle rejects access of the server, or may indicate that the vehicle allows access of the vehicle cloud and the vehicle rejects access of the server. It may be understood that the access log includes a log indicating that the vehicle allows access of the server and a log indicating that the vehicle rejects access of the server. In other words, regardless of whether the vehicle allows access of the server, the vehicle records the access log.

As shown in FIG. 7, the vehicle A provided in embodiments of this application further includes a first generation module A4 and a synchronization module A5. The first generation module A4 is coupled with the sending module A2 and the synchronizing module A5.

In another possible implementation, the first generation module A4 is configured to generate a configuration file, and the synchronization module A5 is configured to synchronize the configuration file generated by the first generation module A4.

Same as that in the foregoing embodiments, the configuration file herein may include a first configuration file and/or a second configuration file. The first configuration file may be a configuration file corresponding to the remote authorization success result, and the second configuration file may be a configuration file corresponding to the remote authorization failure result.

It should be noted that the vehicle may generate only the first configuration file or the second configuration file, or may generate the first configuration file and the second configuration file. It may be understood that the configuration file synchronized by the vehicle is the configuration file generated by the vehicle.

Similar to the technical effect of the foregoing access method, the vehicle A provided in embodiments of this application remotely authorizes the server S by using the receiving module A1 and the sending module A2, so that the server S accesses the vehicle A. In other words, the server S invokes personal data of a vehicle user in the vehicle A, and the server S can further control the vehicle A. This greatly avoids leakage of the personal data of the vehicle A, can minimize a possibility of leakage of the personal data of the vehicle user, and helps protect the personal data of the vehicle user. In addition, when a fault occurs in the to-be-accessed apparatus, the access apparatus invokes the personal data of the to-be-accessed apparatus and/or the access apparatus controls the access apparatus, so that the fault that occurs in the to-be-accessed apparatus can be rectified timely.

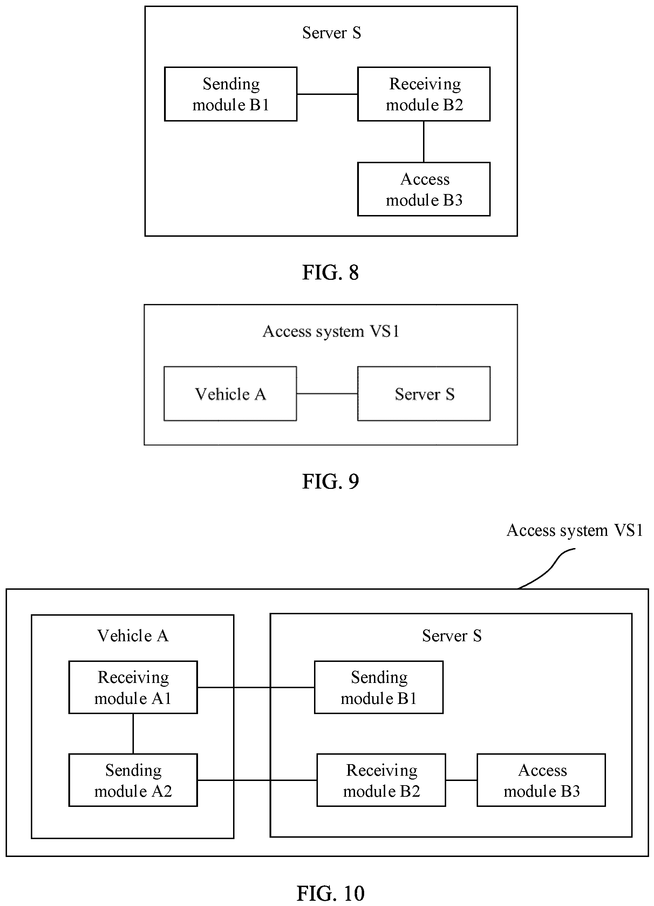

As shown in FIG. 8, an access apparatus (namely, the server S) provided in embodiments of this application may include a sending module B1, a receiving module B2, and an access module B3 that are coupled.

In a possible implementation, the sending module B1 is configured to send a remote authorization request to a vehicle. The receiving module B2 is configured to receive a remote authorization result returned by the vehicle. The access module B3 is configured to access the vehicle based on a remote authorization success result.

It should be noted that, for detailed descriptions of the remote authorization result returned by the vehicle, refer to the foregoing descriptions. Details are not described in this embodiment of this application.

The server S provided in embodiments of this application remotely accesses the vehicle A by using the sending module B1, the receiving module B2, and the access module B3. This can avoid leakage of the personal data of the vehicle user as much as possible, can minimize a possibility of leakage of the personal data of the vehicle user, and helps protect the personal data of the vehicle user.

As shown in FIG. 9, an access system VS 1 provided in embodiments of this application includes the vehicle A (as shown in FIG. 5) and the server S (as shown in FIG. 8). The vehicle A is coupled to the server S.

With reference to FIG. 9 and FIG. 10, the sending module B1 in the server S is coupled to the receiving module A1 in the vehicle A, the sending module A2 in the vehicle A is coupled to the receiving module B2 in the server S, and the receiving module B2 in the server S is further coupled to the access module B3 in the server S.

In a possible implementation, the sending module B1 is configured to send a remote authorization request to the vehicle A. The receiving module A1 is configured to receive the remote authorization request sent by the sending module B1. The sending module A2 is configured to return a remote authorization result to the receiving module B2 based on the remote authorization request from the receiving module A1. The receiving module B2 is configured to receive the remote authorization result returned by the sending module A2. The access module B3 is configured to access the vehicle A when the remote authorization result returned by the sending module A2 is a remote authorization success result.

In the access system VS1 provided in embodiments of this application, the server S remotely accesses the vehicle A through interaction between the vehicle A (including the receiving module A1 and the sending module A2) and the server S (including the sending module B1, the receiving module B2, and the access module B3). The achieved technical effect is the same as that in the foregoing embodiments. Details are not described in this embodiment of this application.

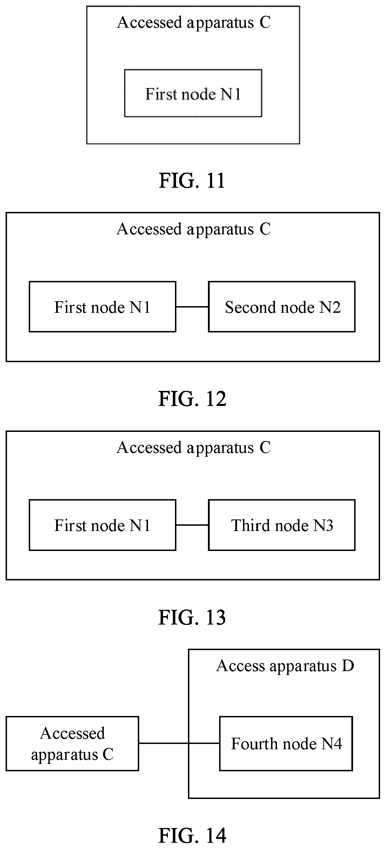

FIG. 11 is a schematic diagram of another structure of a to-be-accessed apparatus according to an embodiment of this application. As shown in FIG. 11, a to-be-accessed apparatus C includes a first node N1. The first node N1 is configured to: receive a remote authorization request sent by an access apparatus D, and return a remote authorization result to the access apparatus D based on the remote authorization request.

For example, the remote authorization request indicates authorized content of remote authorization and/or information about the access apparatus D.

For example, the remote authorization result includes a remote authorization success result or a remote authorization failure result. The remote authorization success result may indicate that the to-be-accessed apparatus C allows access of the access apparatus D to the to-be-accessed apparatus C, and the remote authorization failure result may indicate that the to-be-accessed apparatus C rejects access of the access apparatus D to the to-be-accessed apparatus C.

It may be understood that the remote authorization success result may indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the vehicle allows access of the server to the vehicle only once. The permanent remote authorization success result may indicate that the vehicle allows permanent access of the server to the vehicle. The one-time remote authorization success result and the permanent remote authorization result may indicate that the vehicle allows permanent access of the server to the vehicle when the vehicle allows access of the server to the vehicle at a time.

On the basis of the first node N1, the to-be-accessed apparatus C provided in embodiments of this application further includes a second node N2, as shown in FIG. 12. The second node N2 is coupled to the first node N1.

In a possible implementation, the first node N1 is further configured to determine, based on the remote authorization request, whether the second node N2 already remotely authorizes the access apparatus. If the second node N2 already remotely authorizes the access apparatus D, the second node N2 returns a remote authorization success result to the access apparatus D. If the second node N2 does not remotely authorize the access apparatus D, the second node N2 is configured to determine, based on the remote authorization request, whether to allow remotely authorizing the access apparatus D, to obtain a remote authorization result. The first node N1 is further configured to return the remote authorization result obtained by the second node N2 to the access apparatus D.

Further, the second node N2 is further configured to determine, based on the remote authorization request and a preset authorization life cycle, whether to allow remotely authorizing the access apparatus D. There are the following two cases.

Case 1: If the second node N2 determines, based on the authorized content of remote authorization, the information about the access apparatus D, and the preset authorization life cycle, to allow remotely authorizing the access apparatus D, the second node N2 returns a first message to the first node N1, where the first message may indicate that the second node N2 allows remotely authorizing the access apparatus D.

Case 2: If the second node N2 determines, based on the authorized content of remote authorization, the information about the access apparatus D, and the preset authorization life cycle, to reject to remotely authorize the access apparatus D, the second node N2 returns a second message to the first node N1, where the second message may indicate that the second node N2 rejects to remotely authorize the access apparatus D.

Optionally, the first node N1 is further configured to: return the remote authorization success result to the access apparatus D based on the first message, or return the remote authorization failure result to the access apparatus D based on the second message.

It may be understood that, when the second node N2 returns the first message to the first node N1, the first node N1 returns the remote authorization success result to the access apparatus D based on the first message. In this way, the access apparatus D can invoke data of the to-be-accessed apparatus C, or control the to-be-accessed apparatus C.

It may be further understood that, when the second node N2 returns the second message to the first node N1, the first node N1 returns the remote authorization failure result to the access apparatus D based on the second message. In this case, the access apparatus D cannot invoke the data of the to-be-accessed apparatus C, and cannot control the to-be-accessed apparatus C.

In a possible implementation, in addition to the first node N1, the to-be-accessed apparatus C provided in embodiments of this application further includes a third node N3. As shown in FIG. 13, the third node N3 is coupled to the first node N1.

Further, the first node N1 is further configured to: record an access log, and generate a configuration file. The third node N3 is configured to synchronize the configuration file generated by the first node N1.

Optionally, the access log may indicate that the to-be-accessed apparatus C allows access of the apparatus D and/or the to-be-accessed apparatus C rejects access of the apparatus D. The configuration files include a first configuration file and a second configuration file. The first configuration file is a configuration file corresponding to the remote authorization success result, and the second configuration file is a configuration file corresponding to the remote authorization failure result.

In a possible implementation, the first node N1 is further configured to: when the authorization life cycle ends and the remote authorization success result indicates the one-time remote authorization success result, generate the second configuration file (the second configuration file herein is the same as the foregoing second configuration file generated after the first node N1 records the access log, and is also the configuration file corresponding to the remote authorization failure result), and send the second configuration file to the third node N3. The third node N3 is further configured to control, based on the second configuration file, the access apparatus D to stop accessing the to-be-accessed apparatus C.

The to-be-accessed apparatus C provided in embodiments of this application remotely authorizes the access apparatus D by using the first node N1, so that the access apparatus D can access the to-be-accessed apparatus C. The technical effect is similar to that can be achieved by the vehicle A. Details are not described in this embodiment of this application.

FIG. 14 is a schematic diagram of another structure of an access apparatus according to an embodiment of this application. As shown in FIG. 14, the access apparatus D may include a fourth node N4. The fourth node N4 is configured to: first send a remote authorization request to the to-be-accessed apparatus C, then receive a remote authorization result returned by the to-be-accessed apparatus C, and finally, access the to-be-accessed apparatus C based on a remote authorization success result.

For example, the remote authorization request indicates authorized content of remote authorization and/or information about a server (namely, the fourth node N4). The authorized content of remote authorization may include data content of the vehicle (for example, a driving speed of the vehicle) invoked by the server and/or a manner in which the server controls the vehicle (for example, the server controls the vehicle to stop or decelerate). The information about the server may include an ID of the server, and the ID of the server is used to distinguish, based on different IDs, the server that requires remote authorization.

For example, the remote authorization result may be a remote authorization success result, or may be a remote authorization failure result. The remote authorization success result indicates that the to-be-accessed apparatus C allows access of the access apparatus D to the to-be-accessed apparatus C. The remote authorization failure result indicates that the to-be-accessed apparatus C rejects access of the to-be-accessed apparatus D to the to-be-accessed apparatus C.

It may be understood that the remote authorization result may further indicate a one-time remote authorization success result and/or a permanent remote authorization success result. In other words, the remote authorization result may indicate only the one-time remote authorization success result, or may indicate only the permanent remote authorization success result, or may indicate the two remote authorization success results, namely, the one-time remote authorization success result and the permanent remote authorization result.

It should be noted that the one-time remote authorization success result may indicate that the to-be-accessed apparatus C allows access of the access apparatus D to the to-be-accessed apparatus C only once. The permanent remote authorization success result may indicate that the to-be-accessed apparatus C allows permanent access of the access apparatus D to the to-be-accessed apparatus C. The one-time remote authorization success result and the permanent remote authorization result may indicate that the to-be-accessed apparatus C allows permanent access of the access apparatus D to the to-be-accessed apparatus C when the to-be-accessed apparatus C allows access of the access apparatus D to the to-be-accessed apparatus C at a time.

The access apparatus D provided in embodiments of this application remotely accesses the to-be-accessed apparatus C by using the fourth node N4. The technical effect is similar to that can be achieved by the server S. Details are not described in this embodiment of this application.

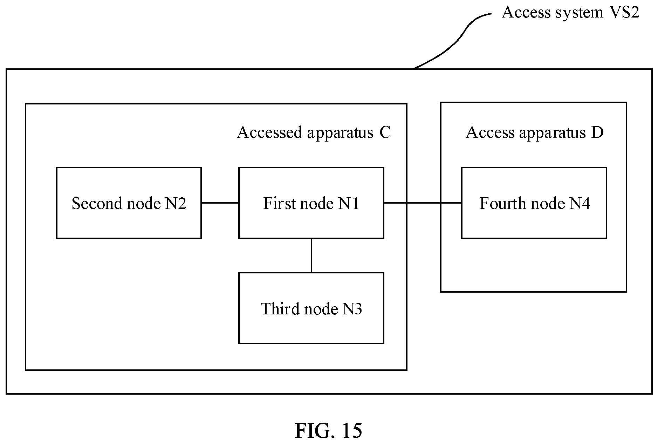

In a possible implementation, an embodiment of this application further provides an access system VS2. As shown in FIG. 15, the access system VS2 includes the foregoing to-be-accessed apparatus C (refer to FIG. 11 to FIG. 13) and the access apparatus D (refer to FIG. 14), and the to-be-accessed apparatus C is coupled to the access apparatus D. The to-be-accessed apparatus C may include a first node N1 (namely, a node that is in the to-be-accessed apparatus C and that receives and processes a remote authorization request and sends a remote authorization result), a second node N2 (namely, the foregoing vehicle user), and a third node N3 (namely, the foregoing electronic control unit ECU). The access apparatus D may include a fourth node N4

(namely, a node that is in the access apparatus D and that sends the remote authorization request). The fourth node N4 is coupled to the first node N1, and the first node N1 is coupled to the second node N2 and the third node N3.

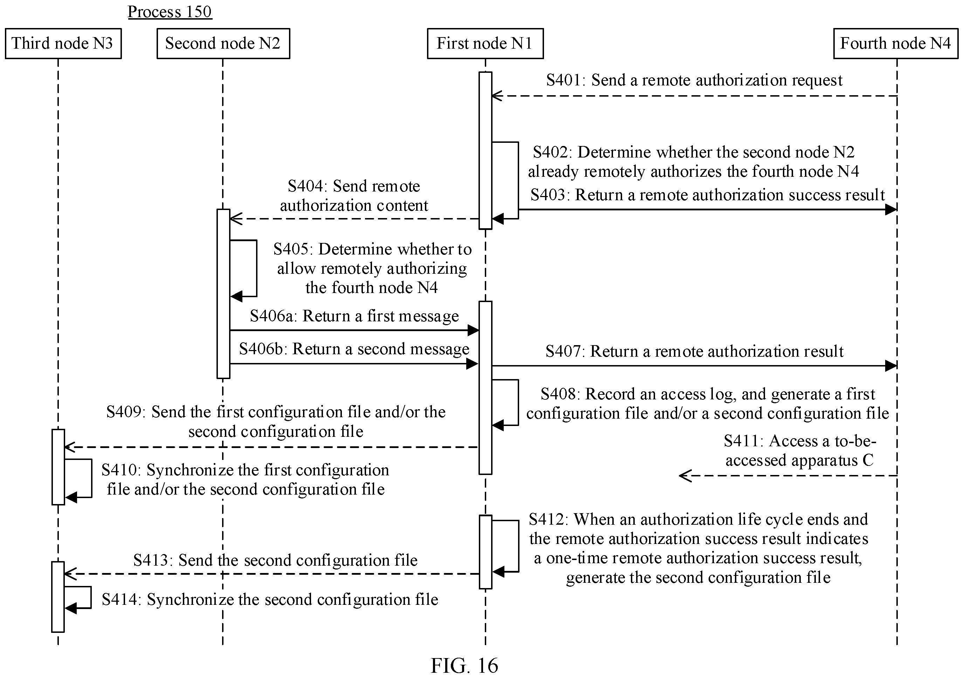

Further, as shown in FIG. 16, the process 150 of interaction between the first node N1, the second node N2, the third node N3, and the fourth node N4 in the access system VS2 is as follows.

Step S401: The fourth node N4 sends a remote authorization request (including authorized content of remote authorization and/or information about the fourth node N4) to the first node N1.

Step S402: The first node N1 determines, based on the received remote authorization request, whether the second node N2 already remotely authorizes the fourth node N4; and if the second node N2 already remotely authorizes the fourth node N4, step S403 is performed; or if the second node N2 does not remotely authorize the fourth node N4, step S404 is performed.

Step S403: The first node N1 returns a remote authorization success result (indicating a one-time remote authorization success result and/or a permanent remote authorization success result) to the fourth node N4.

Step S404: The first node N1 sends the remote authorization request to the second node N2.

Step S405: The second node N2 determines whether to allow remotely authorizing the fourth node N4; and if remotely authorizing the fourth node N4 is allowed, step S406a is performed; or if remotely authorizing the fourth node N4 is not allowed, step S406b is performed.

Step S406a: The second node N2 returns a first message to the first node N1. Step S407 is performed.

Step S406b: The second node N2 returns a second message to the first node N1. Step S407 is performed.

Step S407: The first node N1 returns the remote authorization result (which may be a remote authorization success result or a remote authorization failure result) to the fourth node N4.

Step S408: The first node N1 records an access log, and generates a first configuration file and/or a second configuration file.

Step S409: The first node N1 sends the first configuration file and/or the second configuration file to the third node N3.

Step S410: The third node N3 synchronizes the first configuration file and/or the second configuration file.

Step S411: The fourth node N4 accesses the third node N3.

Step S412: When an authorization life cycle ends and the remote authorization success result indicates the one-time remote authorization success result, the first node N1 generates the second configuration file.

Step S413: The first node N1 sends the second configuration file to the third node N3.

Step S414: The third node N3 synchronizes the second configuration file.

It should be noted that in step S405, the second node N2 determines, based on the authorized content of remote authorization, the information about the fourth node N4, and the preset authorization life cycle, whether the second node N2 allows remotely authorizing the fourth node N4.

The first message in step S406a may indicate that the second node N2 allows remotely authorizing the fourth node N4. The second message in step S406b may indicate that the second node N2 rejects to remotely authorize the fourth node N4.

It may be understood that, when the second node N2 returns the first message to the first node N1, the first node N1 returns the remote authorization success result to the fourth node N4 based on the first message. In this way, the fourth node N4 can invoke data of the third node N3, or control the third node N3.

It may be further understood that, when the second node N2 returns the second message to the first node N1, the first node N1 returns the remote authorization failure result to the fourth node N4 based on the second message. In this case, the fourth node N4 cannot invoke the data of the third node N3, and cannot control the third node N3.

Optionally, after the first node N1 receives the first message or the second message returned by the second node N2, the first node N1 may further perform identifier processing and/or anonymization (anonymization may alternatively be pseudonymization) on related data in the third node N3. Therefore, if the second node N2 returns, to the first node N1, the first message indicating that the second node N2 allows remotely authorizing the fourth node N4, the first node N1 needs to determine the second node N2 that allows/rejects access of the fourth node N4. In addition to the foregoing functions, in a service scenario in which data deletion, modification, or the like needs to be performed, the first node N1 further needs to provide a direct operation interface for the third node N3, so that the third node N3 is allowed to directly modify or delete data through the operation interface. After remote authorization of the first node N1 to the fourth node N4 ends, the third node N3 can obtain service information related to the service scenario based on a service scenario requirement, and process the service information.

In the access system VS2 provided in this application, the fourth node N4 remotely accesses the third node N3 through interaction between the first node N1, the second node N2, the third node N3, and the fourth node N4. The achieved technical effect is the same as that in the foregoing embodiments. Details are not described in this embodiment of this application.

Refer to the foregoing descriptions of the electronic control unit ECU. It can be understood that an increase in a quantity of electronic control units ECUs results in a multiplied length and weight of a data bus. Therefore, the length of the data bus needs to be controlled to reduce a weight of the electronic and electrical architecture EEA and manufacturing costs of the entire vehicle, and a domain controller in the electronic and electrical architecture EEA may further be changed to reduce the quantity of electronic control units ECUs. Alternatively, the quantity of electronic control units ECUs may remain unchanged, and the quantity of electronic control units ECUs is reduced only by controlling the length of the data bus.

Further, the domain controller is connected to different electronic control units ECUs in a range controlled by the domain controller (the range controlled by the domain controller may also be referred to as a function domain) in a centralized manner through a CAN bus, a FlexRay bus, or another type of bus. In other words, the domain controller is connected to different electronic control units ECUs in a same function domain in a centralized manner. However, if there are a plurality of domain controllers (for example, a multi domain controller (multi domain controller, MDC), a cockpit domain controller (cockpit domain controller, CDC), and a vehicle domain controller (vehicle domain controller, VDC)) in the electronic and electrical architecture EEA, each domain controller corresponds to one function domain, and different function domains may be connected by using an Ethernet gateway.

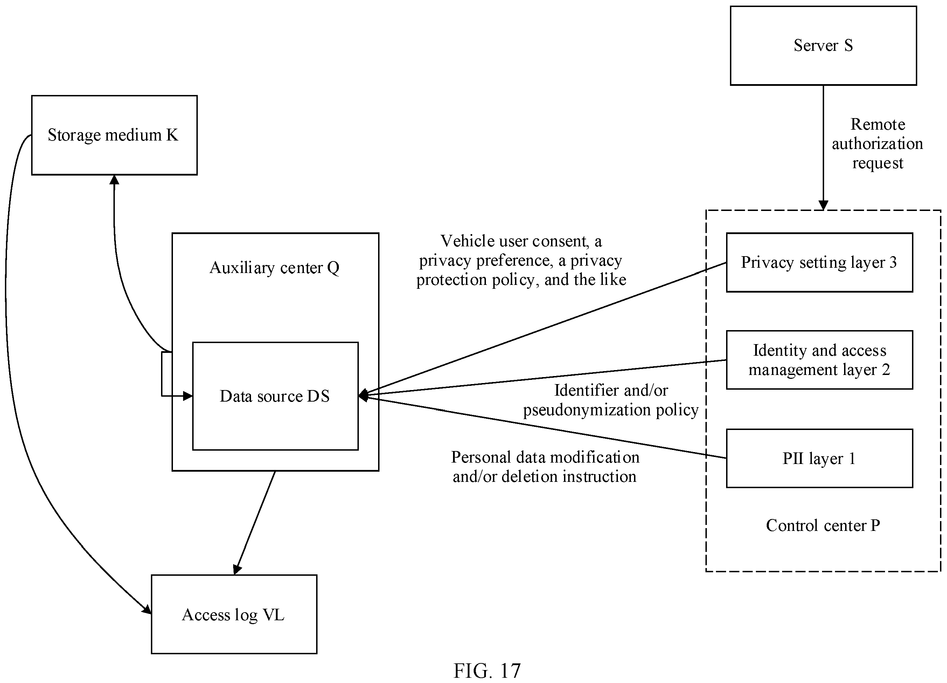

A logical structure framework provided in embodiments of this application is shown in FIG. 17. FIG. 17 shows logic and information flows involved in one remote authorization.

The structure framework in ISO29101 provides only a reference architecture. However, privacy protection requirements need to be considered during actual deployment of the logical structure framework. Therefore, in embodiments of this application, a logical structure framework applicable to a vehicle shown in FIG. 17 is obtained based on various privacy requirements in a current service scenario, related laws and regulations, and a reference architecture provided in ISO29101. Different from the structure framework in ISO29101, as shown in FIG. 17, the logical structure framework in embodiments of this application uses the structure framework in ISO29101 as a control center P (the control center P interacts with a server S, and the server S sends a remote authorization request to the control center P). On this basis, the structure framework in ISO29101 is extended from a perspective of a domain controller of an auxiliary center Q, and a privacy interaction behavior design between the auxiliary center Q and the control center P is added.

When an actual structure framework is deployed by using the logical structure framework, each component in the vehicle shares a function of the logical structure framework. For example, the cockpit domain controller CDC is used as the control center P of the logical structure framework, to implement all functions of three layers: a PII layer 1, an identity and access management layer 2, and a privacy setting layer 3 shown in FIG. 17, and complete management and monitoring of personal data inside the cockpit domain controller CDC. A vehicle control unit (vehicle control unit, VCU) and a body control module (body control module, BCM) are used as a data source DS (which does not store the personal data) of the auxiliary center Q. The data source DS passively receives a management instruction sent by the control center P, and stores received data in a storage medium K through network transmission according to the management instruction. In addition, the auxiliary center Q may further generate an access log VL.

Further, the data source DS may passively receive one or more of a personal data modification and/or deletion instruction sent by the PII layer 1, an identifier and/or a pseudonymization policy sent by the identity and access management layer 2, and vehicle user consent, a privacy preference, a privacy protection policy, and the like that are sent by the privacy setting layer 3.

It should be noted that, in addition to functions such as data storage and modification completed by the vehicle control unit VCU and the body control module BCM, the multi domain controller MDC needs to maintain stored personal data and implement association management of the vehicle user. In addition, the cockpit domain controller CDC may further implement authorization of the vehicle user or transmission of instructions of an on-board diagnostics OBD through interaction between the cockpit domain controller CDC and the on-board diagnostics (on-board diagnostics, OBD).

It can be learned from the foregoing description of the electronic and electrical architecture EEA that each vehicle has a plurality of domain controllers. Therefore, when the foregoing logical architecture is implemented in an actual physical architecture, different function points may be split. For example, the privacy setting layer and the identity and access management layer interconnected to the vehicle user are set on two different domain controllers. However, a change of the physical architecture does not affect an overall remote authorization process. For example, due to different communication protocols inside and outside the vehicle, the remote authorization request arriving at the first node may have undergone protocol conversion (when the remote authorization request sent by the server needs to undergo protocol conversion). Therefore, a node that processes the remote authorization request and a node that receives the remote authorization request may be a same node, that is, the foregoing first node.

Certainly, the node that processes the remote authorization request and the node that receives the remote authorization request may be different nodes. In this case, the first node N1 includes a transmission node and a control node. The transmission node is a node that transmits the remote authorization request sent by the server, and the control node is a node that processes the remote authorization request transmitted by the transmission node.

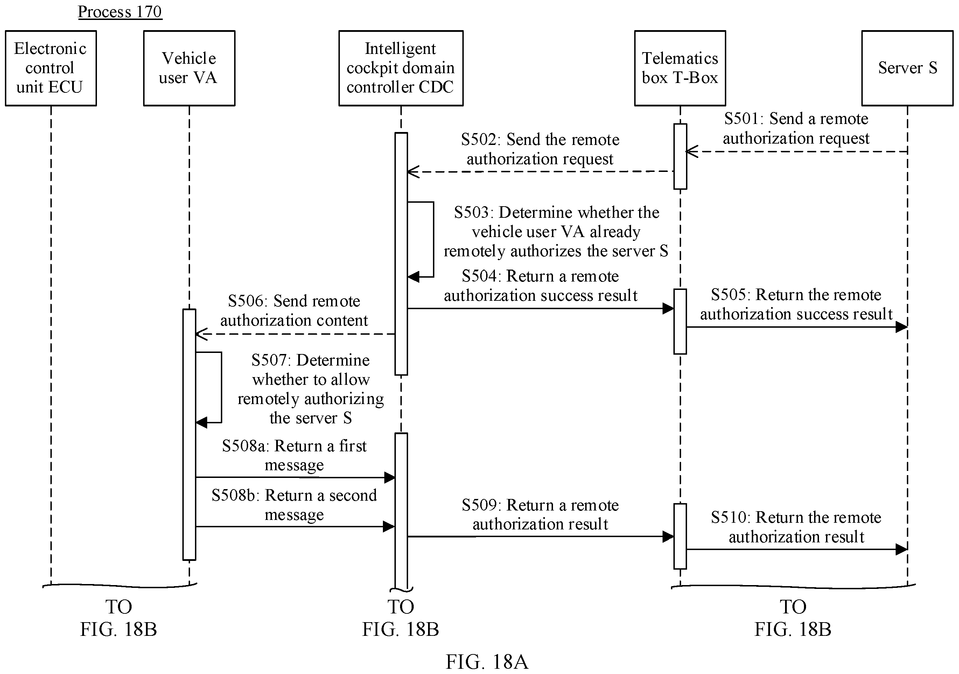

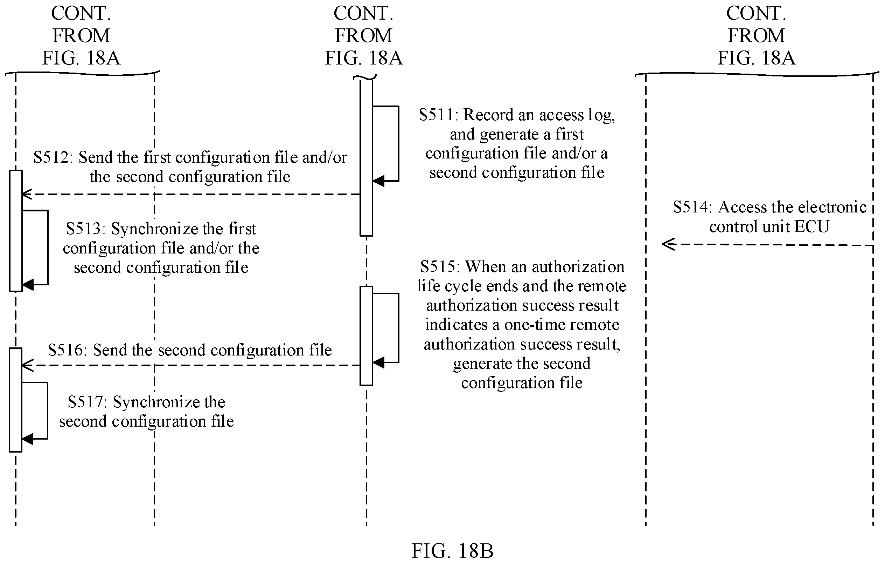

In a possible implementation, a telematics box (telematics box, T-Box, also referred to as a telematics box) may be used as the transmission node in the first node N1 (the telematics box T-Box is responsible for transparently transmitting the remote authorization request and a remote authorization result, and performing protocol conversion on the remote authorization request when protocol conversion is required), the cockpit domain controller CDC may be used as the control node in the first node N1, the vehicle user VA may be used as the second node N2, the electronic control unit ECU may be used as the third node N3, and the server S may be used as the fourth node N4. A working process of the access system VS2 is described below with reference to the access system VS2 shown in FIG. 15 and the process 170 shown in FIG. 18A and FIG. 18B.

Step S501: A server S sends a remote authorization request (including authorized content of remote authorization and/or information about the server S (for example, an ID of the server S)) to a telematics box T-Box.

Step S502: The telematics box T-Box performs protocol conversion on the remote authorization request, and forwards the remote authorization request that undergoes protocol conversion to a cockpit domain controller CDC.

Step S503: The cockpit domain controller CDC determines whether a vehicle user VA already remotely authorizes the server S, and if the vehicle user VA already remotely authorizes the server, step S504 is performed, or if the vehicle user VA does not remotely authorize the server, step S506 is performed.

Step S504: The cockpit domain controller CDC returns a remote authorization success result to the telematics box T-Box. Step S505 is performed.

Step S505: The telematics box T-Box returns the remote authorization success result to the server S.

Step S506: The cockpit domain controller CDC sends the remote authorization request to the vehicle user VA.

Step S507: The vehicle user VA determines, based on the remote authorization request and a preset authorization life cycle, whether to allow remotely authorizing the server S, and if remotely authorizing the server S is allowed, step S508a is performed, or if remotely authorizing the server S is not allowed, step S508b is performed.

Step S508a: The vehicle user VA returns a first message to the cockpit domain controller CDC. Step S509 is performed.

Step S508b: The vehicle user VA returns a second message to the cockpit domain controller CDC. Step S509 is performed.

Step S509: The cockpit domain controller CDC returns a remote authorization result (which may be the remote authorization success result or a remote authorization failure result) to the telematics box T-Box.

Step S510: The telematics box T-Box returns the remote authorization result to the server S.

Step S511: The cockpit domain controller CDC records an access log, and generates a first configuration file and/or a second configuration file.

Step S512: The cockpit domain controller CDC sends the first configuration file and/or the second configuration file to an electronic control unit ECU.

Step S513: The electronic control unit ECU synchronizes the first configuration file and/or the second configuration file.

Step S514: The server S accesses the electronic control unit ECU based on the remote authorization success result.

Step S515: When the authorization life cycle ends and the remote authorization success result indicates a one-time remote authorization success result, the cockpit domain controller CDC generates the second configuration file.

Step S516: The cockpit domain controller CDC sends the second configuration file to the electronic control unit ECU, that is, the electronic control unit ECU does not need to send a query message to the cockpit domain controller CDC, and the cockpit domain controller CDC actively sends the second configuration file to the electronic control unit ECU.

Step S517: The electronic control unit ECU synchronizes the second configuration file.

It should be noted that in step S507, the vehicle user VA determines, based on the authorized content of remote authorization, the information about the server S, and the preset authorization life cycle, whether to allow remotely authorizing the server S. The authorization life cycle may be preset by using the vehicle user VA, or may be carried in the remote authorization request. After the authorization life cycle carrying the remote authorization request is transmitted to the cockpit domain controller CDC through the telematics box T-Box, the cockpit domain controller CDC may dynamically manage the authorization life cycle.

For example, the first message in step S508a may indicate that the vehicle user VA allows remotely authorizing the server S. The second message in step S508b may indicate that the vehicle user VA rejects to remotely authorize the server S.

It may be understood that, when the vehicle user VA returns the first message to the cockpit domain controller CDC, the cockpit domain controller CDC returns the remote authorization success result to the server S based on the first message. In this way, the server S can invoke data of the electronic control unit ECU, or control the electronic control unit ECU.

It may be further understood that, when the vehicle user VA returns the second message to the cockpit domain controller CDC, the cockpit domain controller CDC returns the remote authorization failure result to the server S based on the second message. In this case, the server S cannot invoke the data of the electronic control unit ECU, and cannot control the electronic control unit ECU.

Optionally, after the cockpit domain controller CDC receives the first message or the second message returned by the vehicle user VA, the cockpit domain controller CDC may further perform identifier processing and/or anonymization (anonymization may also be pseudonymization) on related data in the electronic control unit ECU. Therefore, if the vehicle user VA returns, to the cockpit domain controller CDC, the first message indicating that the vehicle user VA allows remotely authorizing the server S, the cockpit domain controller CDC needs to determine the vehicle user VA that allows/rejects access of the server S. In addition to the foregoing functions, in a service scenario in which data deletion, modification, or the like needs to be performed, the cockpit domain controller CDC further needs to provide a direct operation interface for the electronic control unit ECU, so that the electronic control unit ECU is allowed to directly modify or delete data through the operation interface. After remote authorization of the cockpit domain controller CDC to the server S ends, the electronic control unit ECU can obtain service information related to the service scenario based on a service scenario requirement, and process the service information.

In the access system VS2 provided in this application, the server S remotely accesses the electronic control unit ECU through interaction between the cockpit domain controller CDC, the vehicle user VA, the electronic control unit ECU, and the server S. The achieved technical effect is the same as that in the foregoing embodiments. Details are not described in this embodiment of this application.

In the foregoing embodiments of this application, the vehicle user VA determines, based on the remote authorization request and the preset authorization life cycle, whether to allow remotely authorizing the server S. This can ensure that the vehicle user VA properly and transparently processes the remote authorization request. In addition, the vehicle user VA may further provide the server S with an access time period based on the authorization life cycle and permanent remote authorization to the server S. The vehicle user VA can set different authorization life cycles based on the service scenario (for example, access of the server S to a vehicle V). The server S does not need to frequently obtain the remote authorization result from the vehicle V to access the vehicle V, thereby improving experience of the vehicle user VA. In addition, rational and legal remote authorization to the server S can be ensured while experience of the vehicle user VA is ensured.

In addition, in the foregoing embodiments of this application, different servers are remotely authorized by using IDs of the servers carried in the remote authorization request, thereby improving a timely remote authorization capability.

In a possible implementation, before step 503, it is assumed that the vehicle V is bound to an account of the vehicle user VA. In this case, a privacy configuration table (the privacy configuration table may include information about a vehicle user that previously allows/rejects the remote authorization request of the server, and further includes an allowed/a rejected remote authorization request) in the electronic control unit EC may be viewed based on the account of the vehicle user VA. Therefore, in a process of performing the subsequent steps, it may be assumed that the cockpit domain controller CDC of the vehicle V has an account system including a privacy configuration item that can be associated with and view the account of the vehicle user VA, so that synchronization of other information between the electronic control units ECUs (for example, domain controllers) can be reduced, thereby improving efficiency of remote authorization.

It should be noted that because some vehicles V do not include the account system, if the account of the vehicle user VA does not need to be bound, the foregoing process of viewing the privacy configuration table in the electronic control unit EC does not need to be performed.

In the process 170, the cockpit domain controller CDC is used as a control center, and the cockpit domain controller CDC determines whether the vehicle user VA already remotely authorizes the server, records the access log, and generates the second configuration file (the second configuration file needs to be generated when the authorization life cycle ends and the remote authorization success result indicates the one-time remote authorization success result), so that the electronic control unit ECU synchronizes the second configuration file. It may be understood that in the process 170, the telematics box T-Box is only responsible for transparently transmitting the remote authorization request and the remote authorization result, and does not perform any processing on the remote authorization request.

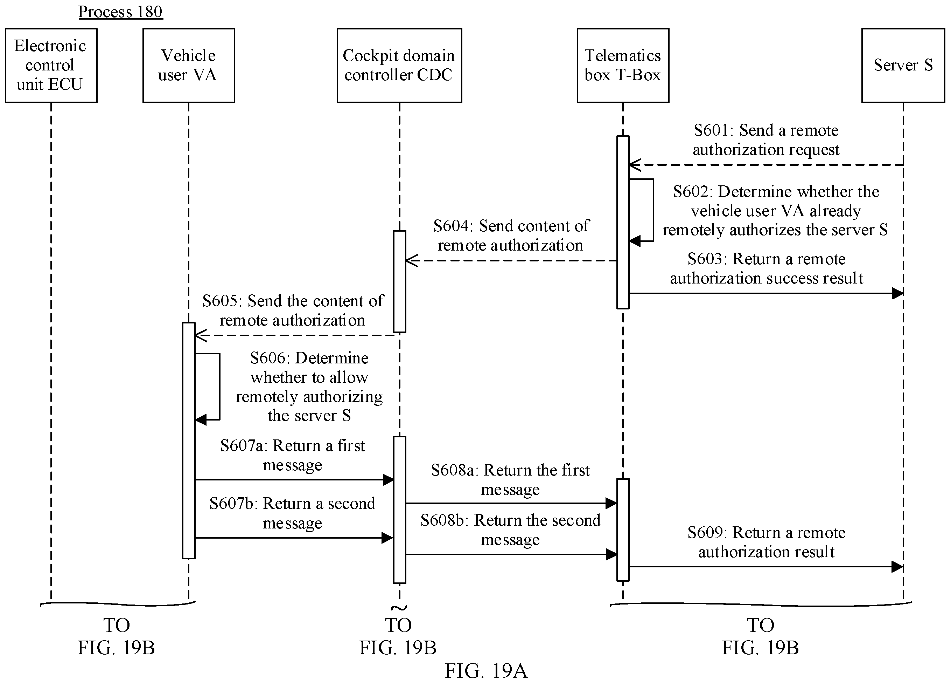

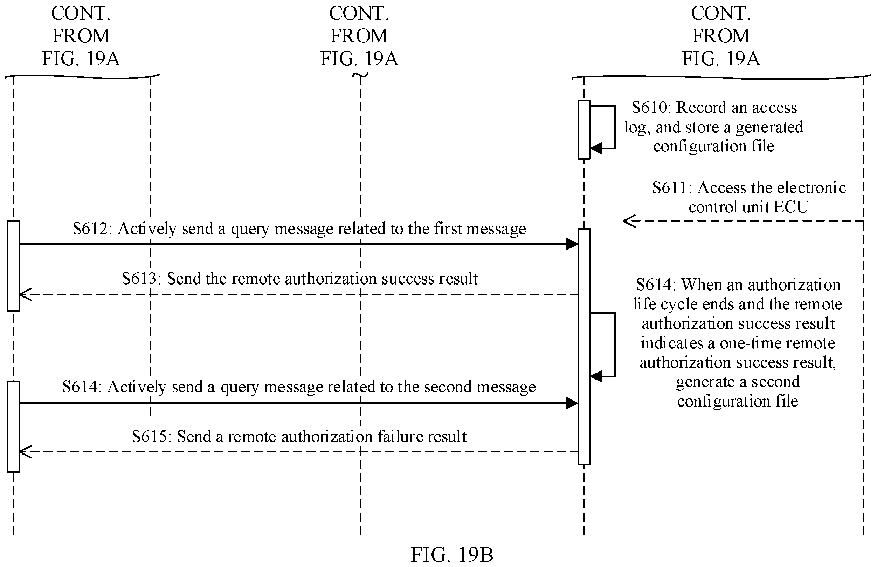

In another possible implementation, the telematics box T-Box may be used as the control node in the first node N1, the cockpit domain controller CDC may be used as the transmission node in the first node N1, the vehicle user may be used as the second node N2, the electronic control unit ECU may be used as the third node N3, and the server S may be used as the fourth node N4. A working process of the access system VS2 is described below with reference to the access system VS2 shown in FIG. 15 and the process 180 shown in FIG. 19A and FIG. 19B.

Step S601: A server S sends a remote authorization request (including authorized content of remote authorization and/or information about the server S (for example, an ID of the server S)) to a telematics box T-Box.

Step S602: The telematics box T-Box determines, based on the remote authorization request, whether a vehicle user VA already remotely authorizes the server S, and if the vehicle user VA already remotely authorizes the server S, step S603 is performed, or if the vehicle user VA does not remotely authorize the server S, step S604 is performed.

Step S603: The telematics box T-Box returns a remote authorization success result to the server S.

Step S604: The telematics box T-Box sends the remote authorization request to a cockpit domain controller CDC.

Step S605: The cockpit domain controller CDC sends the remote authorization request to the vehicle user VA.

Step S606: The vehicle user VA determines, based on the remote authorization request and a preset authorization life cycle, whether to allow remotely authorizing the server S, and if remotely authorizing the server S is allowed, step S607a is performed, or if remotely authorizing the server S is not allowed, step S607b is performed.

Step S607a: The vehicle user VA returns a first message to the cockpit domain controller CDC. Step S608a is performed.

Step S607b: The vehicle user VA returns a second message to the cockpit domain controller CDC. Step S608b is performed.

Step S608a: The cockpit domain controller CDC returns the first message to the telematics box T-Box. Step S609 is performed.

Step S608b: The cockpit domain controller CDC returns the second message to the telematics box T-Box. Step S609 is performed.

Step S609: The cockpit domain controller CDC returns a remote authorization result (which may be the remote authorization success result or a remote authorization failure result) to the server S.

Step S610: The telematics box T-Box records an access log, and stores a generated configuration file (including a first configuration file and/or a second configuration file).

Step S611: The server S accesses the electronic control unit ECU based on the remote authorization success result.

Step S612: The electronic control unit ECU actively sends a query message related to the first message to the telematics box T-Box.

Step S613: The telematics box T-Box sends the remote authorization success result to the electronic control unit ECU.

Step S614: When the authorization life cycle ends and the remote authorization success result indicates a one-time remote authorization success result, the telematics box T-Box generates the second configuration file.

Step S615: The electronic control unit ECU actively sends a query message related to the second message to the telematics box T-Box.

Step S616: The telematics box T-Box sends the remote authorization failure result to the electronic control unit ECU.

It should be noted that in step S606, the vehicle user VA determines, based on the authorized content of remote authorization, the information about the server S, and the preset authorization life cycle, whether to allow remotely authorizing the server S. The authorization life cycle may be preset by using the vehicle user VA, or may be carried in the remote authorization request. The authorization life cycle carrying the remote authorization request may be dynamically managed by using the telematics box T-Box.

For example, the first message in step S607a may indicate that the vehicle user VA allows remotely authorizing the server S. The second message in step S607b may indicate that the vehicle user VA rejects to remotely authorize the server S.

It may be understood that, when the vehicle user VA returns the first message to the cockpit domain controller CDC, the cockpit domain controller CDC forwards the first message to the telematics box T-Box, and the telematics box T-Box returns the remote authorization success result to the server S based on the first message. In this way, the server S can invoke data of the electronic control unit ECU, or control the electronic control unit ECU.

It may be further understood that, when the vehicle user VA returns the second message to the cockpit domain controller CDC, the cockpit domain controller CDC forwards the second message to the telematics box T-Box, and the telematics box T-Box returns the remote authorization failure result to the server S based on the second message. In this case, the server S cannot invoke the data of the electronic control unit ECU, and cannot control the electronic control unit ECU.

Optionally, after the telematics box T-Box receives the first message or the second message that is returned by the vehicle user VA and that is forwarded by the cockpit domain controller CDC, the telematics box T-Box may further perform identifier processing and/or anonymization (anonymization may also be pseudonymization) on related data in the electronic control unit ECU. Therefore, if the vehicle user VA returns, to the telematics box T-Box by using the cockpit domain controller CDC, the first message indicating that the vehicle user VA allows remotely authorizing the server S, the telematics box T-Box needs to determine the vehicle user VA that allows/rejects access of the server S. In addition to the foregoing functions, in a service scenario in which data deletion, modification, or the like needs to be performed, the telematics box T-Box further needs to provide a direct operation interface for the electronic control unit ECU, so that the electronic control unit ECU is allowed to directly modify or delete data through the operation interface. After remote authorization of the telematics box T-Box to the server S ends, the electronic control unit ECU can obtain service information related to the service scenario based on a service scenario requirement, and process the service information.

In the access system VS2 provided in this application, the server S remotely accesses the electronic control unit ECU through interaction between the cockpit domain controller CDC, the vehicle user VA, the electronic control unit ECU, and the server S. The achieved technical effect is the same as that in the foregoing embodiments. Details are not described in this embodiment of this application.

In the foregoing embodiments of this application, the vehicle user VA determines, based on the remote authorization request and the preset authorization life cycle, whether to allow remotely authorizing the server S. This can ensure that the vehicle user VA properly and transparently processes the remote authorization request. In addition, the vehicle user VA may further provide the server S with an access time period based on the authorization life cycle and permanent remote authorization to the server S. The vehicle user VA can set different authorization life cycles based on the service scenario (for example, access of the server S to a vehicle V). The server S does not need to frequently obtain the remote authorization result from the vehicle V to access the vehicle V, thereby improving experience of the vehicle user VA. In addition, rational and legal remote authorization to the server S can be ensured while experience of the vehicle user VA is ensured.

In addition, in the foregoing embodiments of this application, different servers are remotely authorized by using IDs of the servers carried in the remote authorization request, thereby improving a timely remote authorization capability.

It should be further noted that in step S612, the electronic control unit ECU actively sends the query message related to the first message to the telematics box T-Box, and after receiving the query message from the electronic control unit ECU, the telematics box T-Box sends the remote authorization success result to the electronic control unit ECU. In other words, the electronic control unit ECU actively sends the query message related to the first message to the telematics box T-Box, to obtain a configuration file (namely, the first configuration file) related to the remote authorization success result. The telematics box T-Box does not actively deliver the remote authorization success result to the electronic control unit ECU, so that the electronic control unit ECU synchronizes the configuration file.

In addition, in step S615, the electronic control unit ECU actively sends the query message related to the second message to the telematics box T-Box, and after receiving the query message from the electronic control unit ECU, the telematics box T-Box sends the remote authorization failure result to the electronic control unit ECU. In other words, the electronic control unit ECU actively sends the query message related to the second message to the telematics box T-Box, to obtain a configuration file (namely, the second configuration file) related to the remote authorization failure result. The telematics box T-Box does not actively deliver the remote authorization failure result to the electronic control unit ECU, so that the electronic control unit ECU synchronizes the configuration file.

In the process 180, the telematics box T-Box is used as a control center, and the telematics box T-Box processes the remote authorization request, including determining whether the vehicle user VA already remotely authorizes the server S, recording the access log, and generating the second configuration file (the second configuration file needs to be generated when the authorization life cycle ends and the remote authorization success result indicates the one-time remote authorization success result). The telematics box T-Box directly processes the remote authorization request, so as to avoid a resource waste caused by forwarding and protocol conversion of the remote authorization request, simplify an access process, and improve efficiency of access of the server S to the vehicle V.

In embodiments of this application, a vehicle is used as a to-be-accessed apparatus, and a server is used as an access apparatus. The vehicle remotely authorizes the server, so that the server remotely accesses the vehicle. In other words, the vehicle remotely authorizes a vehicle cloud, so that the server invokes personal data of a vehicle user in the vehicle, and the server can further control the vehicle. Certainly, the foregoing technical solutions provided in embodiments of this application are also applicable to any scenario in which the vehicle needs to be accessed through remote authorization of the vehicle, for example, remote data invocation between another external device and the vehicle and/or remote vehicle control.

In a possible implementation, an embodiment of this application provides an electronic device. The electronic device may include at least one processor and a memory. The at least one processor may invoke all or some of computer programs in the memory, to control and manage actions of the foregoing vehicle A or the foregoing to-be-accessed apparatus C. For example, the at least one processor may be configured to support the vehicle A or the to-be-accessed apparatus C in performing the steps performed by the foregoing modules. The memory may be configured to support the vehicle A or the to-be-accessed apparatus C in the foregoing embodiments in storing one or more pieces of stored program code, data, and the like. The processor may implement or execute various example logical modules described with reference to embodiments of this application. The processor may be a combination of one or more microprocessors that implement a computing function, for example, including but not limited to a central processing unit and a controller. In addition, the processor may further include another programmable logic device, a transistor logic device, a discrete hardware component, or the like. The memory may include a random access memory (RAM), a read-only memory ROM, and the like. The random access memory may include a volatile memory (for example, an SRAM, a DRAM, a DDR (double data rate SDRAM, Double Data Rate SDRAM), or an SDRAM) and a non-volatile memory. The RAM may store data and parameters that are required for running of the vehicle A or the to-be-accessed apparatus C, intermediate data generated during running of the vehicle A or the to-be-accessed apparatus Cs, an output result obtained after running of the vehicle A or the to-be-accessed apparatus C, and the like. The read-only memory ROM may store an executable program of the vehicle A or the to-be-accessed apparatus C. The foregoing components may perform respective work by loading the executable program. The executable program stored in the memory may perform the access method shown in FIG. 1.

In another possible implementation, an embodiment of this application provides a transmission chip. The transmission chip may include at least one processor and a memory. The at least one processor may invoke all or some of computer programs in the memory, to control and manage actions of the foregoing server S or the foregoing access apparatus D. For example, the at least one processor may be configured to support the server S or the access apparatus D in performing the steps performed by the foregoing modules. The memory may be configured to support the server S or the access apparatus D in the foregoing embodiments in storing one or more pieces of stored program code, data, and the like. The processor may implement or execute various example logical modules described with reference to embodiments of this application. The processor may be a combination of one or more microprocessors that implement a computing function, for example, including but not limited to a central processing unit and a controller. In addition, the processor may further include another programmable logic device, a transistor logic device, a discrete hardware component, or the like. The memory may include a random access memory (RAM), a read-only memory ROM, and the like. The random access memory may include a volatile memory (for example, an SRAM, a DRAM, a DDR (double data rate SDRAM, Double Data Rate SDRAM), or an SDRAM) and a non-volatile memory. The RAM may store data and parameters that are required for running of the server S or the access apparatus D, intermediate data generated during running of the server S or the access apparatus D, an output result obtained after running of the server S or the access apparatus D, and the like. The read-only memory ROM may store an executable program of the server S or the access apparatus D. The foregoing components may perform respective work by loading the executable program. The executable program stored in the memory may perform the access method shown in FIG. 3.

In another possible implementation, an embodiment of this application provides a computer-readable storage medium. The computer-readable storage medium stores instructions. When the instructions are run on a computer, the computer is configured to perform the access method of the vehicle A or the to-be-accessed apparatus C or the access method of the server S or the access apparatus D in the foregoing embodiments, or perform the access method of the access system VS1 and the access system VS2 in the foregoing embodiments.

In another possible implementation, an embodiment of this application provides a computer program product. The computer program product includes instructions. When the instructions are run on a computer or a processor, the computer or the processor is enabled to implement the access method of the vehicle A or the to-be-accessed apparatus C or the access method of the server S or the access apparatus D in the foregoing embodiments, or perform the access method of the access system VS 1 and the access system VS2 in the foregoing embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be positioned in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An access method, comprising:
receiving a remote authorization request sent by an access apparatus, wherein the remote authorization request indicates authorized content of remote authorization and/or information about the access apparatus; and
returning a remote authorization result to the access apparatus based on the remote authorization request, wherein
the remote authorization result comprises a remote authorization success result or a remote authorization failure result, the remote authorization success result indicates that a to-be-accessed apparatus allows access of the access apparatus to the to-be-accessed apparatus, and the remote authorization failure result indicates that the to-be-accessed apparatus rejects access of the access apparatus to the to-be-accessed apparatus.

2. The access method according to claim 1, wherein the returning a remote authorization result to the access apparatus based on the remote authorization request comprises:
determining, based on the remote authorization request, whether the access apparatus is already remotely authorized; and
if the access apparatus is already remotely authorized, returning the remote authorization success result to the access apparatus; or
if the access apparatus is not remotely authorized, determining, based on the remote authorization request, whether to allow remotely authorizing the access apparatus, and returning the remote authorization result to the access apparatus.

3. The access method according to claim 2, wherein the determining, based on the remote authorization request, whether to allow remotely authorizing the access apparatus, and returning the remote authorization result to the access apparatus comprises:
determining, based on the remote authorization request and a preset authorization life cycle, whether to allow remotely authorizing the access apparatus; and
if remotely authorizing the access apparatus is allowed, returning the remote authorization success result to the access apparatus; or
if remotely authorizing the access apparatus is not allowed, returning the remote authorization failure result to the access apparatus.

4. The access method according to claim 3, wherein the remote authorization success result indicates a one-time remote authorization success result and/or a permanent remote authorization success result.

5. The access method according to any one of claims 1 to 4, wherein after the returning a remote authorization result to the access apparatus based on the remote authorization request, the method further comprises:
recording an access log, wherein the access log indicates that the to-be-accessed apparatus allows access of the access apparatus and/or the to-be-accessed apparatus rejects access of the access apparatus.

6. The access method according to any one of claims 1 to 5, wherein after the returning a remote authorization result to the access apparatus based on the remote authorization request, the method further comprises:
generating a configuration file, wherein the configuration file comprises a first configuration file and/or a second configuration file, the first configuration file is a configuration file corresponding to the remote authorization success result, and the second configuration file is a configuration file corresponding to the remote authorization failure result; and
synchronizing the configuration file.

7. The access method according to any one of claims 4 to 6, wherein after the returning a remote authorization result to the access apparatus based on the remote authorization request, the method further comprises:
if the remote authorization success result indicates the one-time remote authorization success result and the authorization life cycle ends, generating the second configuration file, wherein the second configuration file is the configuration file corresponding to the remote authorization failure result; and
controlling, based on the second configuration file, the access apparatus to stop accessing the to-be-accessed apparatus.

8. An access method, comprising:
sending a remote authorization request to a to-be-accessed apparatus, wherein the remote authorization request indicates authorized content of remote authorization and/or information about an access apparatus;
receiving a remote authorization result returned by the to-be-accessed apparatus, wherein the remote authorization result comprises a remote authorization success result or a remote authorization failure result, the remote authorization success result indicates that the to-be-accessed apparatus allows access of the access apparatus to the to-be-accessed apparatus, and the remote authorization failure result indicates that the to-be-accessed apparatus rejects access of the access apparatus to the to-be-accessed apparatus; and
accessing the to-be-accessed apparatus based on the authorization success result.

9. A to-be-accessed apparatus, comprising:
a receiving module, configured to receive a remote authorization request sent by an access apparatus, wherein the remote authorization request indicates authorized content of remote authorization and/or information about the access apparatus; and
a sending module, configured to return a remote authorization result to the access apparatus based on the remote authorization request, wherein
the remote authorization result comprises a remote authorization success result or a remote authorization failure result, the remote authorization success result indicates that the to-be-accessed apparatus allows access of the access apparatus to the to-be-accessed apparatus, and the remote authorization failure result indicates that the to-be-accessed apparatus rejects access of the access apparatus to the to-be-accessed apparatus.

10. The to-be-accessed apparatus according to claim 9, wherein the sending module is configured to:
determine, based on the remote authorization request, whether the access apparatus is already remotely authorized; and
if the access apparatus is already remotely authorized, return the remote authorization success result to the access apparatus; or
if the access apparatus is not remotely authorized, determine, based on the remote authorization request, whether to allow remotely authorizing the access apparatus, and return the remote authorization result to the access apparatus.

11. The to-be-accessed apparatus according to claim 10, wherein the sending module is configured to:
determine, based on the remote authorization request and a preset authorization life cycle, whether to allow remotely authorizing the access apparatus; and
if remotely authorizing the access apparatus is allowed, return the remote authorization success result to the access apparatus, wherein the remote authorization success result indicates a one-time remote authorization success result and/or a permanent remote authorization success result; or
if remotely authorizing the access apparatus is not allowed, return the remote authorization failure result to the access apparatus.

12. The to-be-accessed apparatus according to any one of claims 9 to 11, wherein the to-be-accessed apparatus further comprises a recording module, and the recording module is coupled to the sending module, wherein
the recording module is configured to record an access log, wherein the access log indicates that the to-be-accessed apparatus allows access of the access apparatus and/or the to-be-accessed apparatus rejects access of the access apparatus.

13. The to-be-accessed apparatus according to any one of claims 9 to 12, wherein the to-be-accessed apparatus further comprises a first generation module and a synchronization module, and the first generation module is coupled to the sending module and the synchronization module, wherein
the first generation module is configured to generate a configuration file, wherein the configuration file comprises a first configuration file and a second configuration file, the first configuration file is a configuration file corresponding to the remote authorization success result, and the second configuration file is a configuration file corresponding to the remote authorization failure result; and
the synchronization module is configured to synchronize the configuration file.

14. The to-be-accessed apparatus according to any one of claims 11 to 13, wherein the to-be-accessed apparatus further comprises a second generation module and a control module, and the second generation module is coupled to the sending module and the control module, wherein
the second generation module is configured to: when the authorization life cycle ends and the remote authorization success result indicates the one-time remote authorization success result, generate the second configuration file, wherein the second configuration file is the configuration file corresponding to the remote authorization failure result; and
the control module is configured to control, based on the second configuration file, the access apparatus to stop accessing the to-be-accessed apparatus.

15. An access apparatus, comprising:
a sending module, configured to send a remote authorization request to a to-be-accessed apparatus, wherein the remote authorization request indicates authorized content of remote authorization and/or information about the access apparatus;
a receiving module, configured to receive a remote authorization result returned by the to-be-accessed apparatus, wherein the remote authorization result comprises a remote authorization success result or a remote authorization failure result, the remote authorization success result indicates that the to-be-accessed apparatus allows access of the access apparatus to the to-be-accessed apparatus, and the remote authorization failure result indicates that the to-be-accessed apparatus rejects access of the access apparatus to the to-be-accessed apparatus; and
an access module, configured to access the to-be-accessed apparatus based on the authorization success result.

16. An access system, comprising the to-be-accessed apparatus according to any one of claims 9 to 14 and the access apparatus according to claim 15.

17. A to-be-accessed apparatus, comprising a first node, wherein the first node is configured to:
receive a remote authorization request sent by an access apparatus, wherein the remote authorization request indicates authorized content of remote authorization and/or information about the access apparatus; and
return a remote authorization result to the access apparatus based on the remote authorization request, wherein the remote authorization result comprises a remote authorization success result or a remote authorization failure result, the remote authorization success result indicates that the to-be-accessed apparatus allows access of the access apparatus to the to-be-accessed apparatus, and the remote authorization failure result indicates that the to-be-accessed apparatus rejects access of the access apparatus to the to-be-accessed apparatus.

18. The to-be-accessed apparatus according to claim 17, wherein the to-be-accessed apparatus further comprises a second node, and the second node is coupled to the first node, wherein
the first node is further configured to: determine, based on the remote authorization request, whether the second node already remotely authorizes the access apparatus; and if the second node already remotely authorizes the access apparatus, return the remote authorization success result to the access apparatus;
the second node is configured to: if the second node does not remotely authorize the access apparatus, determine, based on the remote authorization request, whether to allow remotely authorizing the access apparatus, to obtain the remote authorization result; and
the first node is further configured to return the remote authorization result to the access apparatus.

19. The to-be-accessed apparatus according to claim 18, wherein
the second node is further configured to: determine, based on the remote authorization request and a preset authorization life cycle, whether remotely authorizing the access apparatus is allowed; and if remotely authorizing the access apparatus is allowed, return a first message to the first node, wherein the first message indicates that the second node allows remotely authorizing the access apparatus; or if remotely authorizing the access apparatus is not allowed, return a second message to the first node, wherein the second message indicates that the second node rejects to remotely authorize the access apparatus; and
the first node is further configured to: return the remote authorization success result to the access apparatus based on the first message, or return the remote authorization failure result to the access apparatus based on the second message.

20. The to-be-accessed apparatus according to claim 19, wherein the remote authorization success result indicates a one-time remote authorization success result and/or a permanent remote authorization success result.

21. The to-be-accessed apparatus according to any one of claims 17 to 20, wherein the to-be-accessed apparatus further comprises a third node, and the third node is coupled to the first node, wherein
the first node is further configured to: record an access log, and generate a configuration file, wherein the access log indicates that the to-be-accessed apparatus allows access of the access apparatus and/or the to-be-accessed apparatus rejects access of the access apparatus, the configuration file comprises a first configuration file and a second configuration file, the first configuration file is a configuration file corresponding to the remote authorization success result, and the second configuration file is a configuration file corresponding to the remote authorization failure result; and
the third node is configured to synchronize the configuration file.

22. The to-be-accessed apparatus according to claim 20 or 21, wherein
the first node is further configured to: when the authorization life cycle ends and the remote authorization success result indicates the one-time remote authorization success result, generate the second configuration file, and send the second configuration file to the third node, wherein the second configuration file is the configuration file corresponding to the remote authorization failure result; and
the third node is further configured to control, based on the second configuration file, the access apparatus to stop accessing the to-be-accessed apparatus.

23. An access apparatus, comprising a fourth node, wherein the fourth node is configured to:
send a remote authorization request to a to-be-accessed apparatus, wherein the remote authorization request indicates authorized content of remote authorization and/or information about the access apparatus;
receive a remote authorization result returned by the to-be-accessed apparatus, wherein the remote authorization result comprises a remote authorization success result or a remote authorization failure result, the remote authorization success result indicates that the to-be-accessed apparatus allows access of the access apparatus to the to-be-accessed apparatus, and the remote authorization failure result indicates that the to-be-accessed apparatus rejects access of the access apparatus to the to-be-accessed apparatus; and
access the to-be-accessed apparatus based on the authorization success result.

24. An access system, comprising the to-be-accessed apparatus according to any one of claims 17 to 22 and the access apparatus according to claim 23.

25. An electronic device, comprising:
one or more processors; and
a memory, configured to store one or more programs, wherein
when the one or more programs are executed by the one or more processors, the method according to any one of claims 1 to 7 is implemented.

26. A transmission chip, comprising:
one or more processors; and
a memory, configured to store one or more programs, wherein
when the one or more programs are executed by the one or more processors, the method according to claim 8 is implemented.

27. A computer-readable storage medium, wherein the computer-readable storage medium stores a computer program, and when the computer program is executed, the method according to any one of claims 1 to 8 is implemented.

28. A computer program, wherein when the computer program is executed by a computer, the method according to any one of claims 1 to 8 is implemented.
